(19) Europäisches Patentamt / European Patent Office / Office européen des brevets

(11) **EP 1 938 052 B1**

(12) **EUROPÄISCHE PATENTSCHRIFT**

(45) Veröffentlichungstag und Bekanntmachung des Hinweises auf die Patenterteilung:
**04.03.2020  Patentblatt 2020/10**

(21) Anmeldenummer: **06806798.2**

(22) Anmeldetag: **22.09.2006**

(51) Int Cl.:
*G01F 1/84* (2006.01)          *G01N 9/00* (2006.01)
*G01N 11/16* (2006.01)          *G01F 15/02* (2006.01)
*G01F 25/00* (2006.01)

(86) Internationale Anmeldenummer:
**PCT/EP2006/066636**

(87) Internationale Veröffentlichungsnummer:
**WO 2007/045539 (26.04.2007 Gazette 2007/17)**

(54) **IN-LINE-MESSGERÄT UND VERFAHREN ZUM ÜBERWACHEN VON VERÄNDERUNGEN EINER ROHRWAND**

IN-LINE MEASURING DEVICE AND METHOD FOR MONITORING CHANGES OF A PIPE WALL

APPAREIL DE MESURE EN LIGNE ET PROCÉDÉ DE SURVEILLANCE DES CHANGEMENTS D'UNE PAROI DE TUYAU

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.10.2005   DE 102005050898**

(43) Veröffentlichungstag der Anmeldung:
**02.07.2008   Patentblatt 2008/27**

(73) Patentinhaber: **Endress+Hauser Flowtec AG
4153 Reinach (CH)**

(72) Erfinder:
• **DRAHM, Wolfgang
  85435 Erding (DE)**

• **RIEDER, Alfred
  84032 Landshut (DE)**
• **FUCHS, Michael
  79427 Eschbach (DE)**

(74) Vertreter: **Andres, Angelika Maria et al
Endress+Hauser (Deutschland) AG+Co. KG
PatServe
Colmarer Strasse 6
79576 Weil am Rhein (DE)**

(56) Entgegenhaltungen:
**US-A1- 2003 212 509     US-A1- 2003 233 878
US-A1- 2005 229 719**

EP 1 938 052 B1

**Beschreibung**

Die Erfindung betrifft ein In-Line-Meßgerät mit einem Meßaufnehmer vom Vibrationstyp, insb. ein Coriolis-Massedurchfluß-/ Dichtemeßgerät, für ein in einer Rohrleitung strömendes, insb. zwei- oder mehrphasiges, Medium sowie ein Verfahren zum Erzeugen eines eine physikalische Meßgröße des Mediums, beispielsweise einen Massedurchfluß, eine Dichte und/oder eine Viskosität des Mediums, repräsentierenden Meßwerts mittels eines solchen Meßaufnehmers.

In der Prozeß-Meß- und Automatisierungstechnik werden für die Messung physikalischer Parameter eines in einer Rohrleitung strömenden Mediums, wie z.B. dem Massedurchfluß, der Dichte und/oder der Viskosität, oftmals solche In-Line-Meßgeräte, insb. Coriolis-Massendurchfluß-Meßgeräte, verwendet, die mittels eines im Betrieb vom Medium durchströmten Meßaufnehmers vom Vibrationstyp und einer daran angeschlossenen Meß- und Betriebsschaltung, im Medium Reaktionskräfte, wie z.B. mit dem Massedurchfluß korrespondierende Corioliskräfte, mit der Dichte korrespondierende Trägheitskräfte oder mit der Viskosität korrespondierende Reibungskräfte etc., bewirken und von diesen abgeleitet ein den jeweiligen Massedurchfluß, ein die jeweilige Viskosität und/oder ein die jeweilige Dichte des Mediums repräsentierendes Meßsignal erzeugen. Derartige In-Line-Meßgeräte mit einem Meßaufnehmer vom Vibrationstyp sowie deren Wirkungsweise sind dem Fachmann an und für sich bekannt und z.B. in der WO-A 05/040734, der WO-A 05/040733, der WO-A 03/095950, der WO-A 03/095949, der WO-A 03/076880, der WO-A 02/37063, der WO-A 01/33174, der WO-A 00/57141, der WO-A 99/39164, der WO-A 98/07009, der WO-A 95/16897, der WO-A 88/03261, der US-A 2005/0229719, der US-A 2004/0200268, der US-A 2003/0208325, der US-B 68 89 561, der US-B 68 40 109, der US-B 66 91 583, der US-B 66 51 513, der US-B 65 13 393, der US-B 65 05 519, der US-A 60 06 609, der US-A 58 69 770, der US-A 57 96 011, der US-A 56 16 868, der US-A 56 02 346, der US-A 56 02 345, der US-A 55 31 126, der US-A 53 01 557, der US-A 52 53 533, der US-A 52 18 873, der US-A 50 69 074, der US-A 48 76 898, der US-A 47 33 569, der US-A 46 80 974, der US-A 46 60 421, der US-A 45 24 610, der US-A 44 91 025, der US-A 41 87 721, der EP-A 1 291 639, der EP-A 1 281 938, der EP-A 1 001 254 oder der EP-A 553 939 ausführlich und detailliert beschrieben.

Zum Führen des Mediums umfassen die Meßaufnehmer jeweils mindestens ein in einem, beispielsweise rohr- oder kastenförmigen, Tragrahmen gehaltertes Meßrohr mit einem geraden Rohrsegment, das zum Erzeugen oben genannter Reaktionskräfte im Betrieb - angetrieben von einer elektro-mechanischen Erregeranordnung - in einem primären Nutzmode praktisch einfrequent vibrieren gelassen wird. Zum Erfassen, insb. einlaßseitiger und auslaßseitiger, Vibrationen des Rohrsegments weisen die Meßaufnehmer ferner jeweils eine auf Bewegungen des Rohrsegments reagierende physikalischelektrische Sensoranordnung auf.

Bei Coriolis-Massedurchflußmeßgeräten beruht die Messung des Massedurchflusses eines in einer Rohrleitung strömenden Mediums beispielsweise darauf, daß das Medium durch das in die Rohrleitung eingefügte und im Betrieb im Nutzmode lateral zu einer Meßrohrachse schwingende Meßrohr strömen gelassen wird, wodurch im Medium Corioliskräfte induziert werden. Diese wiederum bewirken, daß einlaßseitige und auslaßseitige Bereiche des Meßrohrs zueinander phasenverschoben schwingen. Die Größe dieser Phasenverschiebungen dient als ein Maß für den Massedurchfluß. Die Schwingungen des Meßrohrs werden daher mittels zweier entlang des Meßrohres voneinander beabstandeter Schwingungssensoren der vorgenannten Sensoranordnung erfaßt und in Schwingungsmeßsignale gewandelt, aus deren gegenseitiger Phasenverschiebung der Massedurchfluß abgeleitet wird. Bereits die eingangs referierte US-A 41 87 721 erwähnt ferner, daß mittels solcher In-Line-Meßgeräte auch die momentane Dichte des strömenden Mediums meßbar ist, und zwar anhand einer Frequenz wenigstens eines der von der Sensoranordnung gelieferten Schwingungsmeßsignale. Überdies wird zumeist auch eine Temperatur des Mediums in geeigneter Weise direkt gemessen, beispielsweise mittels eines am Meßrohr angeordneten Temperatursensors. Zudem können gerade Meßrohre bekanntlich, zu Torsionsschwingungen um eine im wesentlichen mit der Meßrohrlängsachse parallel verlaufenden oder koinzidierenden Torsions-Schwingungsachse angeregt, bewirken, daß im hindurchgeführten Medium radiale Scherkräfte erzeugt werden, wodurch wiederum den Torsionsschwingungen signifikant Schwingungsenergie entzogen und im Medium dissipiert wird. Daraus resultierend erfolgt eine erhebliche Bedämpfung der Torsionsschwingungen des schwingenden Meßrohrs zu deren Aufrechterhaltung demzufolge dem Meßrohr zusätzlich elektrische Erregerleistung zugeführt werden muß. Abgeleitet von einer zum Aufrechterhalten von Torsionsschwingungen des Meßrohrs erforderlichen elektrischen Erregerleistung, kann in der dem Fachmann bekannten Weise mittels des Meßaufnehmers so auch eine Viskosität des Mediums zumindest näherungsweise bestimmt werden, vgl. hierzu insb. auch die US-A 2005/0229719, die US-A 45 24 610, die US-A 52 53 533, die US-A 60 06 609 oder die US-B 66 51 513.

Ein Problem von In-Line-Meßgeräten der beschriebenen Art ist allerdings darin zu sehen, daß die Schwingungseigenschaften des Meßaufnehmers und insoweit auch die von den Schwingungen des Meßrohrs abgeleiteten Schwingungsmeßsignale nicht nur allein von den primären physikalischen Meßgrößen des Mediums, beispielsweise dem Massendurchfluß, der Dichte und/oder der Viskosität etc., und deren betriebsgemäßen Änderungen abhängig sind, sondern in erheblichem Maße auch von gleichfalls veränderlichen sekundären Parametern, beispielsweise meßgerätspezifischen Parameter oder aber auch die Umgebungs- und Einbaubedingungen reflektierende Parameter. Als Beispiel seien stellvertretend für solche sich ändernden sekundären Parameter die Elastizitäts- und Schubmoduln der im Meßaufnehmer verbauten Materialien sowie die Geometrie des wenigstens einen Meßrohrs genannt. Die Änderungen der sekundären Parameter können dabei sowohl reversible, beispielsweise im Falle von temperaturbedingten elastischen Verformungen, als auch im wesentlichen irreversible sein. Erfreulicherweise kann ein Großteil solcher sekundärer Parameter oder zumindest die deren Änderungen verursachenden Einflußgrößen im Meßbetrieb ergänzend erfaßt und insoweit die Einflüsse von Änderungen solcher Geräte- und/oder Einbauparameter auf die Meßgenauigkeit weitgehend kompensiert werden. Dies kann, wie z.B. in der der US-B 65 12 987, der US-A 47 68 384, EP-A 578 113, vorgeschlagen, einerseits unter Verwendung zusätzlich im In-Line-Meßgerät angeordneter Sensoren, wie z.B. Temperaturfühler, Dehnungsmeßstreifen, Beschleunigungssensoren, Drucksensor etc., realisiert werden und andererseits anhand der Schwingungsmeßsignale selbst erfolgen.

Das Prinzip der auf den Schwingungsmeßsignalen beruhenden Kompensationsverfahren besteht im Kern darin, daß zusätzlich zu den die oben erwähnten Reaktionskräfte bewirkenden primären Nutzmoden weitere, zumeist lediglich als sekundäre Hilfsmoden dienende Schwingungsmoden von zumeist höherer Schwingungsfrequenz angeregt werden. So ist z.B. in der WO-A 05/040734, der US-B 68 89 561, der US-B 65 57 422, der US-A 59 07 104, der US-A 58 31 178, der US-A 57 73 727, der US-A 57 28 952,der US-A 46 80 974 jeweils ein In-Line-Meßgerät zum Meßen wenigstens einer physikalischen Meßgröße eines in einer Rohrleitung geführten Mediums gezeigt, welches In-Line-Meßgerät einen Meßaufnehmer vom Vibrationstyp und eine mit dem Meßaufnehmer elektrisch gekoppelte Meßgerät-Elektronik umfaßt,

- wobei der Meßaufnehmer aufweist:

-- wenigstens ein dem Führen des zu messenden Mediums dienendes Meßrohr, das mit der angeschlossenen Rohrleitung kommuniziert,
-- eine auf das wenigstens eine Meßrohr einwirkende Erregeranordnung zum Vibrierenlassen des wenigstens einen Meßrohrs,
--- die das Meßrohr im Betrieb zumindest zeitweise und/oder zumindest anteilig in erste Lateralschwingungen mit einer ersten Schwingungsfrequenz um eine gedachte Lateralschwingungsachse versetzt, und
--- die das Meßrohr im Betrieb zumindest zeitweise und/oder zumindest anteilig in zweite Lateralschwingungen mit einer von der ersten Schwingungsfrequenz verschiedenen zweiten Schwingungsfrequenz um eine gedachte Lateralschwingungsachse versetzt, sowie

-- eine Sensoranordnung zum Erfassen von Vibrationen des Meßrohrs, die Schwingungen des Meßrohrs repräsentierende Schwingungsmeßsignale liefert,

- wobei die Meßgerät-Elektronik zumindest zeitweise ein die Erregeranordnung treibendes Erregersignal liefert, und
- wobei die Meßgerät-Elektronik mittels der Schwingungsmeßsignale und/oder mittels des Erregerssignals zumindest zeitweise wenigstens einen Meßwert generiert, der die wenigstens eine zu messende physikalische Meßgröße des Mediums repräsentiert.

Anhand der Schwingungsmeßsignale bestimmt die Meßgerät-Elektronik wiederkehrend die Schwingungsfrequenzen der Lateralschwingungen des Meßrohrs und ermittelt und/oder überwacht basierend darauf wenigstens einen Geräte- und/oder Einbauparameter des In-Line-Meßgeräts oder detektiert zumindest einen unzulässig hohen Meßfehler.

Wie u.a. in der WO-A 05/040734 erwähnt, kann auch die Bildung eines Belages an der Innenseite der Meßrohrwand, beispielsweise infolge von Sedimentation, Adhäsion oder dergleichen, in erheblichem Maße zu einer Beeinträchtigung der Meßgenauigkeit des In-Line-Meßgeräts führen, sofern diese Belagsbildung nicht bei der Ermittlung des Meßwerts berücksichtigt wird. Untersuchungen haben nunmehr aber gezeigt, daß eine möglichst frühzeitige Detektion von Belag am Meßrohr basierend auf multiplen Lateralschwingungen mit erheblichen Schwierigkeiten verbunden sein kann. Dies im besonderen auch deshalb, weil einerseits die Dichte des Belags naturgemäß etwa im Bereich der Dichte des Mediums liegt, und andererseits dessen Einfluß auf die Lateralschwingungen mit dem des zu messenden Mediums in etwa vergleichbar ist. Infolgedessen zeigt ein sich bildender Belag im wesentlichen die gleichen Wirkungen auf die Lateralschwingungen, wie betriebsgemäße Änderungen der physikalischen Eigenschaften des Mediums, insb. Änderungen von dessen Dichte und/oder Viskosität.

Darüber hinaus kann aber auch der Fall eintreten, daß nicht nur das wenigstens eine Meßrohr des In-Line-Meßgeräts von einem solchen Belag befallen ist, sondern im besonderen auch Teile der an das In-Line-Meßgerät angeschlossenen Rohrleitung. Dies wiederum kann dann beispielsweise dazu führen, daß auch andere In-Line-Meßgeräte und/oder deren Einlaufstrecken von Belagsbildung betroffen sein können, ohne daß dies durch eine entsprechende Selbstvalidierung seitens der betroffeneen Meßgeräte ohne weiteres erkennbar wäre.

Eine Aufgabe der Erfindung besteht daher darin, ein entsprechendes In-Line-Meßgerät mit einem Meßaufnehmer vom Vibrationstyp, insb. ein Coriolis-Massendurchfluß-/Dichtemessgerät und/oder eine Viskositäts-Meßgerät, anzugeben, das einerseits geeignet ist, die zu messende physikalische Meßgröße, insb. den Massendurchfluß, die Dichte und/oder die Viskosität, sehr genau zu messen, und das anderseits in der Lage ist, sich am Meßrohr bildenden Belag zumindest bei Überschreiten einer minimalen Belagsdicke zu detektieren. Eine weitere Aufgabe der Erfindung besteht darin, ein entsprechendes Verfahren anzugeben, das ein verläßliches Detektieren und/oder ein ausreichend genaues Ausmessen eines am Meßrohr gegebildeten Belags anhand von in herkömmlichen Meßaufnehmern der beschriebene Art erzeugten Schwingungssignalen ermöglicht. Ferner besteht eine Aufgabe der Erfindung darin, das Medium berührende Rohrwände, insb. auch die an den Meßaufnehmer angeschlossene Rohrleitung, auf einen allfälligen Belagsbefall hin zu überwachen.

Dafür besteht die Erfindung in einem, beispielsweise als Coriolis-Massedurchfluß-/ Dichtemessgerät und/oder Viskositätsmeßgerät ausgebildeten, In-Line-Meßgerät gemäß dem unabhängigen Patentanspruch 1.

Darüberhinaus besteht die Erfindung in einem Verfahren zum Überwachen von Veränderungen einer Rohrwand gemäß dem unabhängigen Patentanspruch 12.

Vorteilhafte Ausgestaltungen des In-Line-Meßgeräts bzw. des Verfahrens sind durch die Unteransprüche definiert.

Ein Grundgedanke der Erfindung besteht darin, den Meßaufnehmer zwecks einer Detektion von Veränderungen der Rohrwand des Meßrohres, insb. auch zum Zwecke einer Kompensation von damit einhergehenden Meßfehlern, - zumindest zeitweise in einem solchen Schwingungsmode zu betreiben, bei dem das Meßrohr zumindest anteilig Torsionsschwingungen ausführt, da diese in erheblichem Maße belagssensitiv sein können. Anhand von zumindest der Schwingungsfrequenz der Torsionsschwingungen des Meßrohrs können so auf eine sehr einfache Weise verläßliche Informationen darüber gewonnen werden, ob das wenigstens eine Meßrohr von einem unerwünschten Belag befallen ist. Ein weiterer Grundgedanke der Erfindung besteht darin, mittels eines In-Line-Meßgeräts der beschriebenen Art - ggf. auch unter Einbeziehung von die Rohrleitung betreffenden, *a priori* vorhandener Betriebserfahrung - Betriebszustände von dem vor- und/oder nachgelagerte Abschnitten der angeschlossen Rohrleitung zu überwachen.

Die Erfindung beruht dabei im besonderen auf der überraschenden Erkenntnis, daß die Eigenfrequenz natürlicher Torsionsschwingungen solcher Meßrohre nicht nur in erheblichem Maße durch Beläge beeinflußt, die sich an der Rohrwand des Meßrohrs gebildet haben, sondern sogar so in gut reproduzierbarer Weise mit Änderungen im Belag korrespondieren, daß dieser, basierend auf der Torsionsschwingungsfrequenz, zumindest hinsichtlich seiner wirksamen Masse meßbar ist; im Vergleich dazu sind beispielsweise die Schwingungsfrequenzen von Lateralschwingungen gerader Meßrohre in einem erheblich niedrigerem Maße von sich am Meßrohr bildenden Belägen abhängig. Mit Änderungen der Viskosität des Mediums dabei gegebenenfalls einhergehenden geringfügige Veränderungen in den Eigenfrequenzen der Torsionsschwingungen können unter Berücksichtigung der im Betrieb zumeist ohnehin in geeigneter Weise gemessenen Viskosität ohne weiteres kompensiert werden. Ebenso können allfällige Dichteabhängigkeiten der Eigenfrequenzen der Torsionsschwingungen basierend auf der zumeist ebenfalls ermittelte Mediumsdichte und/oder basierend auf zumeist ebenfalls gemessenen Schwingungsfrequenzen von Lateralschwingungen verifiziert werden. Gleichermaßen ergänzend können neben den Einflüssen von Änderungen primärer Meßgrößen selbstverständlich auch die mit den Änderungen der eingangs erwähnten sekundären Parametern einhergehenden Störeinflüsse auch auf die Torsionsschwingungen entsprechend mit berücksichtigt werden, wie z.B. durch Temperaturschwankungen bedingte Änderungen von Axialspannungen, Elastizitäts- und/oder Schubmoduln.

Ein Vorteil der Erfindung ist u.a. darin zu sehen, daß die angeregten Torsionsschwingungen auch dazu dienen können, die Viskosität des im Meßrohr geführten Mediums sehr genau zu messen, vgl. hierzu die eingangs erwähnten US-A 45 24 610 oder US-B 68 40 109. Ein weiterer Vorteil der Erfindung besteht ferner darin, daß aufgrund der zumeist großen Ähnlichkeit von Meßrohr und angeschlossener Rohrleitung, insb. hinsichtlich ihrer Strömungs- und/oder Materialeigenschaften, von dem anhand der Schwingungseigenschaften des Meßrohrs detektierten Belags auch auf Belagsbild in der Rohrleitung zurück geschlossen werden kann.

Die Erfindung sowie vorteilhafte Ausgestaltungen davon werden nun anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert, wird auf bereits erwähnte Bezugszeichen in nachfolgenden Figuren verzichtet.

Fig. 1 zeigt ein in eine Rohrleitung einfügbares In-Line-Meßgerät zum Meßen eines Massendurchflusses eines in der Rohrleitung geführten Fluids,

Fig. 2 zeigt ein Ausführungsbeispiel für einen für das Meßgerät von Fig. 1 geeigneten Meßaufnehmer vom Vibrations-Typ in einer perspektivischen Seitenansicht,

Fig. 3 zeigt den Meßaufnehmer von Fig. 2 geschnitten in einer Seitenansicht,

Fig. 4 zeigt den Meßaufnehmer von Fig. 2 in einem ersten Querschnitt,

Fig. 5 zeigt den Meßaufnehmer von Fig. 2 in einem zweiten Querschnitt,

Fig. 6 zeigt schematisch nach der Art eines Blockschaltbildes eine Ausgestaltung einer für das In-Line-Meßgerät von Fig. 1 geeigneten Meßgerät-Elektronik, und

Fig. 7 zeigen graphisch mit einem In-Line-Meßgerät gemäß den Fig. 1 bis 7 experimentell ermittelte Meßdaten.

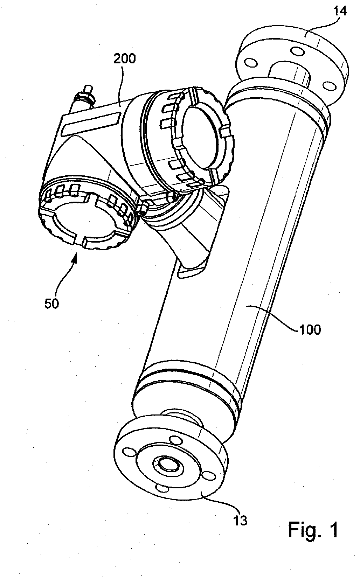

In Fig. 1 ist perspektivisch ein, insb. multvariables, In-Line-Meßgerät 1 dargestellt, das im besonderen dazu geeignet ist, eine oder mehrere physikalische Meßgrößen, z.B. einen Massendurchfluß $m$, eine Dichte $\rho$ und/oder eine Viskosität $\eta$, eines in einerhier aus Übersichtlichkeitsgründen nicht dargestellten - Rohrleitung strömenden Mediums zu erfassen und in einen diese Meßgröße momentan repräsentierenden Meßwert $X_X$ abzubilden, beispielsweise einen den Massendurchfluß $m$ repräsentierenden Massendurchfluß-Meßwert $X_m$, einen die Dichte $\rho$ repräsentierenden Dichte-Meßwert $X_\rho$ und/oder einen die Viskosität $\eta$ repräsentierenden Viskositäts-Meßwert $X_\eta$. Medium kann dabei praktisch jeder strömungsfähige Stoff sein, beispielsweise eine Flüssigkeit, ein Gas, ein Dampf oder dergleichen.

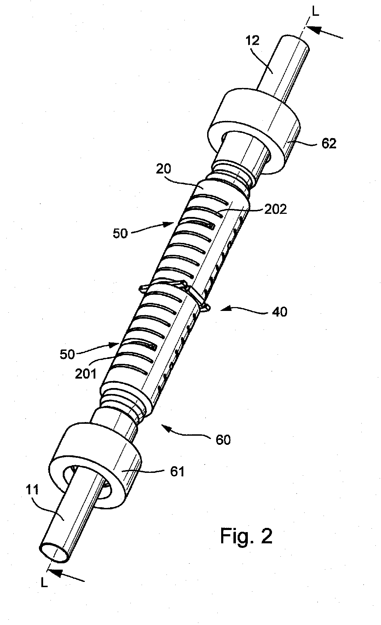

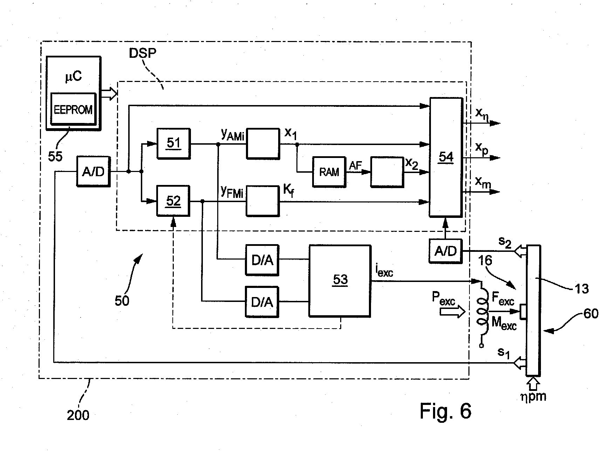

Das beispielsweise als Coriolis-Massendurchfluß-/Dichte- und/oder Viskositätsmeßer ausgebildete In-Line-Meßgerät 1 umfaßt dafür einen im Betrieb vom zu messenden Medium durchströmten Meßaufnehmer 10 vom Vibrationstyp, von dem ein Ausführungsbeispiel und Ausgestaltungen in den Fig. 2 bis 5 gezeigt sind, sowie eine, wie in Fig. 1 und 6 schematisch dargestellt, mit dem Meßaufnehmer 10 elektrisch verbundene Meßgerät-Elektronik 50. Vorzugsweise ist die Meßgerät-Elektronik 50 ferner so ausgelegt, daß sie im Betrieb des In-Line-Meßgerät 1 mit einer diesem übergeordneten Meßwertverarbeitungseinheit, beispielsweise einer speicherprogrammierbaren Steuerung (SPS), einem Personalcomputer und/oder einer Workstation, via Datenübertragungssystem, beipielsweise einem Feldbussystem, Meß- und/oder andere Betriebsdaten austauschen kann. Des weiteren ist die Meßgerät-Elektronik 50 so ausgelegt, dass sie von einer externen Energieversorgung, beispielsweise auch über das vorgenannte Feldbussystem, gespeist werden kann. Für den Fall, daß das Vibrations-Meßgerät für eine Ankopplung an ein Feldbus- oder ein anderes Kommunikationssystem vorgesehen ist, weist die, insb. programmierbare, Meßgerät-Elektronik 50 eine entsprechende Kommunikations-Schnittstelle für eine Datenkommunikation auf, z.B. zum Senden der Meßdaten an die bereits erwähnte speicherprogrammierbare Steuerung oder ein übergeordnetes Prozeßleitsystem, auf. Zur Unterbringung der Meßgerät-Elektronik 50 ist ferner ein, insb. von außen direkt am Meßaufnehmer 10 angebrachtes oder aber von diesem abgesetztes, Elektronikgehäuse 200 vorgesehen.

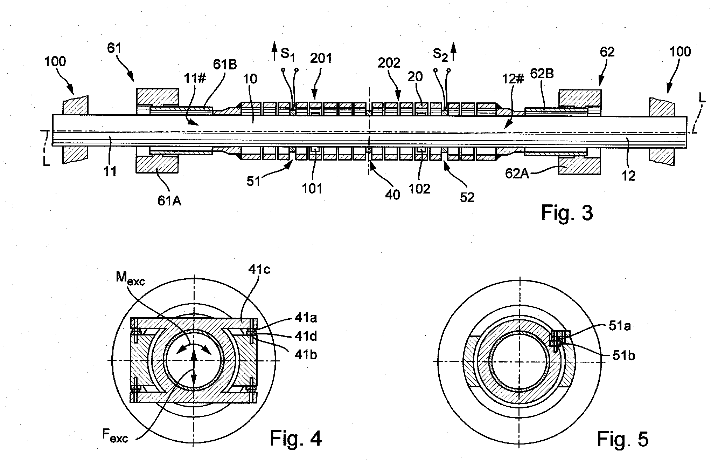

Wie bereits erwähnt, umfasst das In-Line-Meßgerät einen Meßaufnehmer vom Vibrationstyp, der im Betrieb vom zu messenden Medium durchströmt ist, und der dazu dient, in einem hindurchströmenden Medium solche mechanische Reaktionskräfte, insb. vom Massendurchfluß m abhängige Corioliskräfte, von der Mediumsdichte $\rho$ abhängige Trägheitskräfte und/oder von der Mediumsviskosität $\eta$ abhängige Reibungskräfte, zu erzeugen, die meßbar, insb. sensorisch erfaßbar, auf den Meßaufnehmer zurückwirken. Abgeleitet von diesen das Medium beschreibenden Reaktionskräften können so in der dem Fachmann bekannten Weise z.B. der Massendurchfluß $m$, die Dichte $\rho$ und/oder die Viskosität $\eta$ des Mediums gemessen werden. In den Fig. 2 und 3 ist ein Ausführungsbeispiel einer als Meßaufnehmer 10 vom Vibrations-Typ gezeigt dienenden physikalisch-elektrischen Wandleranordnung schematisch dargestellt. Der mechanische Aufbau und die Funktionsweise einer derartigen Wandleranordnung ist dem Fachmann an und für sich bekannt und z.B. auch in der US-B 66 91 583, der

WO-A 03/095949 oder der WO-A 03/095950 detailliert beschrieben.

Zum Führen des Mediums und zum Erzeugen besagter Reaktionskräfte umfaßt der Meßaufnehmer wenigstens ein im wesentlichen gerades Meßrohr 10 von vorgebbarem Meßrohrdurchmeßer, das im Betrieb zumindest zeitweise vibrieren gelassen wird und dadurch wiederholt elastisch verformt wird. Elastisches Verformen des Meßrohrlumens bedeutet hier, dass eine Raumform und/oder eine Raumlage des Meßrohrlumens innerhalb eines Elastizitätsbereiches des Meßrohrs 10 in vorgebbarer Weise zyklisch, insb. periodisch, verändert wird, vgl. hierzu auch die US-A 48 01 897, die US-A 56 48 616, die US-A 57 96 011, die US-A 60 06 609, die US-B 66 91 583, die WO-A 03/095949 und/oder die WO-A 03/095950. Es sei an dieser Stelle darauf verwiesen, daß anstelle des im Ausführungsbeispiel gezeigten Meßaufnehmers mit einem einzigen, geraden Meßrohr, der der Realisierung der Erfindung dienende Meßaufnehmer gleichwohl aus einer Vielzahl von aus dem Stand der Technik bekannten Meßaufnehmern vom Vibrationstyp ausgewählt werden kann. Im besonderen eignen sich beispielsweise auch Meßaufnehmer vom Vibrationstyp mit zwei zueinander im wesentlichen parallelen geraden Meßrohren.

Wie in Fig. 2 und 3 gezeigt, weist der Meßaufnehmer 1 weiters ein das Meßrohr 10 sowie allfällige weitere Komponenten des Meßaufnehmers (siehe auch weiter unten) umgebendes Meßaufnehmer-Gehäuse 100 auf, das diese vor schädlichen Umgebungseinflüssen schützt und/oder der allfällige Schallemissionen des Meßaufnehmers nach außen hin dämpft. Überdies dient das Meßaufnehmer-Gehäuse 100 auch dazu ein die Meßgerät-Elektronik 50 einhausendes Elektronik-Gehäuse 200 zu haltern. Hierzu ist das Meßaufnehmer-Gehäuse 100 mit einem halsartigen Übergangsstück versehen, an dem das Elektronik-Gehäuse 200 entsprechend fixiert ist, vgl. Fig. 1. Anstelle des hier gezeigten rohrförmigen, koaxial zum Meßrohr verlaufenden Wandlergehäuses 100 können selbstverständlich auch andere geeignete Gehäuseformen, wie z.B. kastenförmige Strukturen, verwendete werden.

Das Meßrohr 10, das in der üblichen Weise einlaß-seitig und auslaß-seitig mit der das zu messende Medium zu- bzw. abführenden Rohrleitung kommuniziert, ist in dem eher starren, insb. biege- und verwindungssteifen, Wandlergehäuse 100 schwingfähig aufgehängt.

Zum Hindurchströmenlassen des Mediums ist das Meßrohr 10 über ein in ein Einlaßende 11# einmündendes Einlaßrohrstück 11 und über ein in ein Auslaßende 12# einmündendes Auslaßrohrstück 12 an die Rohrleitung angeschlossen. Meßrohr 10, Einlaß- und Auslaßrohrstück 11, 12 sind zueinander und zur oben erwähnten Meßrohrlängsachse L möglichst fluchtend ausgerichtet und in vorteilhafter Weise einstückig ausgeführt, so daß zu deren Herstellung z.B. ein einziges rohrförmiges Halbzeug dienen kann; falls erforderlich können Meßrohr 10 und Rohrstücke 11, 12 aber auch mittels einzelner, nachträglich zusammengefügter, z.B. zusammengeschweißter, Halbzeuge hergestellt werden. Zur Herstellung des Meßrohrs 10, wie auch des Einlaß- und des Auslaßrohrstücks 11, 12 kann praktisch jedes der für solche Meßaufnehmer üblichen Materialien verwendet werden, wie z.B. Eisen-, Titan-, Zirkonium- und/oder Tantal-Legierungen, Kunststoffe oder Keramiken. Für den Fall, daß der Meßaufnehmer lösbar mit der Rohrleitung zu montieren ist, ist dem Einlaßrohrstück 11 und dem Auslaßrohrstück 12 bevorzugt jeweils ein erster bzw. zweiter Flansch 13, 14 angeformt; falls erforderlich können Ein- und Auslaßrohrstück 11, 12 aber auch direkt mit der Rohrleitung, z.B. mittels Schweißen oder Hartlötung, verbunden werden. Ferner ist beim Meßaufnehmer ein am ein Ein- und am Auslaßrohrstück 11, 12 fixiertes, das Meßrohr 10 aufnehmendes Wandlergehäuse 100 vorgesehen, vgl. hierzu Fig. 1 und 3.

Zum Meßen des Massendurchflusses $m$ und/oder einer Dichte $\rho$ wird das Meßrohr 10 gemäß einer Ausgestaltung der Erfindung in einem als Lateral-Schwingungsmode ausgebildeten Schwingungsnutzmode angeregt, bei dem es zumindest anteilig Schwingungen, insb. Biegeschwingungen, lateral zu einer gedachten Meßrohrlängsachse L ausführt, insb. so, daß es sich, im wesentlichen auf einer natürlichen Biege-Eigenfrequenz schwingend, gemäß einer natürlichen ersten Eigenschwingungsform lateral ausbiegt. Für den Fall, daß das Medium in der angeschlossenen Rohrleitung strömt und somit der Massendurchfluß m von Null verschieden ist, werden mittels des im ersten Schwingungsnutzmode schwingenden Meßrohrs 10 im hindurchströmenden Medium Corioliskräfte induziert. Diese wiederum wirken auf das Meßrohr 10 zurück und bewirken so in der dem Fachmann bekannten Weise eine zusätzliche, sensorisch erfaßbare Verformung des Meßrohrs 10 im wesentlichen gemäß einer natürlichen zweiten Eigenschwingungsform, die der ersten Eigenschwingungsform koplanar überlagert ist. Die momentane Ausprägung der Verformung des Meßrohrs 10 ist dabei, insb. hinsichtlich ihrer Amplituden, auch vom momentanen Massendurchfluß m abhängig. Als zweite Eigenschwingungsform, dem sogenannten Coriolismode, können z.B., wie bei derartigen Meßaufnehmern üblich, antisymmetrische Biegeschwingungsformen mit zwei Schwingungsbäuchen oder mit vier Schwingungsbäuchen dienen. Da natürliche Eigenfrequenzen solcher Lateral-Schwingungsmoden von Meßrohren bekanntlich in besonderem Maße auch von der Dichte $\rho$ des Mediums abhängig sind, kann mittels des In-Line-Meßgerät ohne weiteres zusätzlich zum Massedurchfluß $m$ auch die Dichte $\rho$ gemessen werden.

Nach einer weiteren Ausgestaltung der Erfindung wird das Meßrohr 10 zum Erzeugen von massedurchflussabhängigen Corioliskräften im strömenden Medium und/oder dichteabhängigen Trägheitskräften zumindest zeitweise mit einer Lateralschwingungs-Frequenz $f_{excL}$ angeregt, die möglichst genau einer niedrigsten natürlichen Biege-Eigenfrequenz des Meßrohrs 10 entspricht, so daß also das lateral schwingende, jedoch nicht vom Fluid durchströmte Meßrohr 10 bezüglich einer zur Meßrohrlängsachse L senkrechten Mittelachse im wesentlichen symmetrisch ausgebogen wird und dabei einen einzigen Schwingungsbauch aufweist. Diese niedrigste Biege-Eigenfrequenz kann beispielsweise bei einem als Meßrohr 10 dienenden Edelstahlrohr mit einer Nennweite von 20 mm, einer Wandstärke von etwa 1,2 mm und einer Länge von etwa 350 mm sowie den üblichen Anbauten bei etwa 850 Hz bis 900 Hz liegen.

Zusätzlich zu den Lateral-Schwingungen wird das wenigstens eine Meßrohr 10, insb. auch zum Erzeugen von viskositätsabhängigen Scherkräften im strömenden Medium, zumindest zeitweise in einem Torsions-Schwingungsmode betrieben. In diesem Torsions-Schwingungsmode ist das Meßrohr zu Torsionschwingungen um eine im wesentlichen mit der Meßrohrlängsachse L parallel verlaufenden oder koinzidierenden Torsions-Schwingungsachse angeregt, und zwar so, daß es im wesentlichen gemäß einer natürlichen Torsionsschwingungsform um seine Längsachse L verdrillt wird, vgl. hierzu z.B. auch die US-A 45 24 610, die US-A 52 53 533, die US-A 60 06 609 oder die EP-A 1 158 289. Das Anregen der Torsionschwingungen kann hierbei sowohl alternierend zum ersten Schwingungsnutzmode und getrennt von diesem in einem zweiten Schwingungsnutzmode oder aber, zumindest bei voneinander unterscheidbaren Schwingungsfrequenzen, auch simultan zu den Lateralschwingungen im ersten Schwingungsnutzmode erfolgen. Anders gesagt arbeitet der Meßaufnehmer zumindest zeitweise in einem Dual-Modebetrieb, bei dem das wenigstens eine Meßrohr 10 abwechselnd und/oder alternierend in wenigstens zwei von einander im wesentlichen unabhängigen Schwingungsmoden, nämlich dem Lateral-Schwingungsmode und dem Torsions-Schwingungsmode vibrieren gelassen wird. Nach einer weiteren Ausgestaltung der Erfindung wird das Meßrohr 10, insb. simultan zu den Lateralschwingungen im Nutzmode, mit einer Torsionsschwingungs-Frequenz $f_{excT}$, die möglichst genau einer natürlichen Torsions-Eigenfrequenz des Meßrohrs 10 entspricht, angeregt. Eine niedrigste Torsions-Eigenfrequenz kann beispielsweise bei einem geraden Meßrohr etwa im Bereich des Doppelten der niedrigsten Biege-Eigenfrequenz liegen.

Wie bereits erwähnt, werden die Schwingungen des Meßrohrs 11 einerseits durch Abgabe von Schwingungsenergie, insb. an das Medium, bedämpft. Andererseits aber kann dem vibrierenden Meßrohr 10 auch dadurch in erheblichem Maße Schwingungsenergie entzogen werden, daß mit diesem mechanisch gekoppelte Bauteile, wie z.B. das Wandlergehäuse 100 oder die angeschlossene Rohrleitung, ebenfalls zu Schwingungen angeregt werden. Zum Zwecke der Unterdrückung oder Vermeidung einer allfälligen Abgabe von Schwingungsenergie an die Umgebung ist daher im Meßaufnehmer ferner ein einlaßseitig und auslaßseitig am Meßrohr 10 fixierter Gegenschwinger 20 vorgesehen. Der Gegenschwinger 20 kann, wie in der Fig. 2 schematisch dargestellt, einstückig ausgeführt sein. Falls erforderlich, kann der Gegenschwinger 20 auch, wie z.B. auch in der US-A 59 69 265, der EP-A 317 340 oder der WO-A 00/14485 gezeigt, mehrteilig zusammengesetzt oder mittels zweier separater, einlaß- bzw. auslaßseitig am Meßrohr 10 fixierter Teil-Gegenschwinger realisiert sein. Der Gegenschwinger 20 dient u.a. dazu, den Meßaufnehmer für wenigstens einen vorherbestimmten, z.B. eine im Betrieb des Meßaufnehmers am häufigsten zu erwartende oder auch kritische Mediumsdichte soweit dynamisch auszubalancieren, daß im vibrierenden Meßrohr 10 allfällig erzeugte Querkräfte und/oder Biegemomente weitgehend kompensiert werden, vgl. hierzu auch die US-B 66 91 583. Darüberhinaus dient der Gegenschwinger 20 für den oben beschriebenen Fall, daß das Meßrohr 10 im Betrieb auch zu Torsionsschwingungen angeregt wird, außerdem dazu, solche Torsions-Momente, die vom vorzugsweise um seine Längsachse L tordierenden einzigen Meßrohr 10 erzeugt werden, weitgehend kompensierende Gegen-Torsionsmomente zu erzeugen und somit die Umgebung des Meßaufnehmers, insb. aber die angeschlossene Rohrleitung, weitgehend frei von dynamischen Torsionsmomenten zu halten. Der Gegenschwinger 20 kann, wie in den Fig. 2 und 3 schematisch dargestellt, rohrförmig ausgeführt und beipielsweise so am Einlaßende 11# und am Auslaßende 12# mit dem Meßrohr 10 verbunden sein, daß er, wie in Fig. 3 gezeigt, im wesentlichen koaxial zum Meßrohr 10 ausgerichtet ist. Als Material für den Gegenschwinger 20 kommen praktisch dieselben Materialien in Frage, wie sie auch für das Meßrohr 10 verwendbar sind, also beispielsweise Edelstahl, Titan-Legierungen etc.

Der, insb. im Vergleich zum Meßrohr 10 etwas weniger torsions-und/oder biegeelastische, Gegenschwinger 20 wird im Betrieb gleichfalls schwingen gelassen, und zwar im wesentlichen gleichfrequent, jedoch außerphasig, insb. gegenphasig, zum Meßrohr 10. Dementsprechend ist der Gegenschwinger 20 mit wenigstens einer seiner Torsisons-Eigenfrequenzen möglichst genau auf jene Torsions-Schwingungsfrequenzen abgestimmt, mit der dieses im Betrieb vorwiegend schwingen gelassen wird. Darüber hinaus ist der Gegenschwinger 20 auch in wenigstens einer seiner Biege-Eigenfrequenz zu wenigstens einer Biege-Schwingungsfrequenz mit der das Meßrohr 10, insb. im Nutzmode, schwingen gelassen wird möglichst gleich eingestellt und wird der Gegenschwinger 20 im Betrieb des Meßaufnehmers auch zu Lateralschwingungen, insb. Biegeschwingungen, angeregt, die im wesentlichen koplanar zu Lateralschwingungen des Meßrohrs 10, insb. den Biegeschwingungen des Nutzmodes, ausgebildet sind.

Nach einer Ausgestaltung der Erfindung sind dafür, wie in Fig. 2 und 3 schematisch dargestellt, im Gegenschwinger 20 eingearbeitete Nuten 201, 202 vorgesehen, die eine genaues Einstellen von dessen Torsions-Eigenfrequenzen, insb. ein Absenken der Torsions-Eigenfrequenzen durch Absenken einer Torsions-Steifigkeit des Gegenschwingers 20, auf einfache Weise ermöglichen. Obwohl die Nuten 201, 202 in der Fig. 2 oder 3 in Richtung der Längsachse L im wesentlichen gleichverteilt gezeigt sind, können sie, falls erforderlich, ohne weiteres auch in Richtung der Längsachse L ungleich verteilt angeordnet sein. Darüber hinaus kann die Massenverteilung des Gegenschwingers auch mittels entsprechender diskreter Massenausgleichskörper korrigiert werden, die am Meßrohr 10 fixiert sind. Als Massenausgleichskörper können z.B. auf das Meßrohr 10 aufgeschobene Metallringe oder an diesem fixierte Metallplättchen dienen.

Zum Erzeugen mechanischer Schwingungen des Meßrohrs 10 umfaßt der Meßaufnehmer ferner eine, insb. elektrodynamische, Erregeranordnung 40, die mit dem Meßrohr gekoppelt ist. Die Erregeranordnung 40 dient dazu, eine von der Meßgerät-Elektronik inform eines entsprechenden Erregersignals, z.B. mit einem eingeprägten Erregerstrom $i_{exc}$ und/oder einer geregelten Spannung, eingespeiste elektrische Erregerleistung $P_{exc}$ in ein auf das Meßrohr 10, z.B. pulsförmig oder harmonisch, einwirkendes und dieses elastisch verformendes Erregermoment $M_{exc}$ und/oder in eine lateral auf das Meßrohr 10 wirkende Erregerkraft $F_{exc}$ umzuwandeln. Zur Erzielung eines möglichst hohen Wirkungsgrades und eines möglichst hohen Signal/ Rausch-Verhältnisses ist die Erregerleistung $P_{exc}$ möglichst genau so eingestellt, dass überwiegend die Schwingungen des Meßrohrs 10 im Nutzmode aufrecht erhalten werden, und zwar möglichst genau auf einer momentanen Eigenfrequenz des vom Medium durchströmten Meßrohrs oder auch auf mehreren solcher Eigenfrequenzen. Die Erregerkraft $F_{exc}$ wie auch das Erregermoment $M_{exc}$ können dabei, wie in Fig. 4 angedeutet, jeweils bidirektional oder aber auch unidirektional ausgebildet sein und in der dem Fachmann bekannten Weise z.B. mittels einer Strom- und/oder Spannungs-Regelschaltung, hinsichtlich ihrer Amplitude und, z.B. mittels einer Phasen-Regelschleife, hinsichtlich ihrer Frequenz eingestellt werden. Als Erregeranordnung 40 kann, wie bei solchen Meßaufnehmern vom Vibrationstyp üblich, beispielsweise eine Tauchspulenanordnung mit einer am Gegenschwinger 20 oder von innen am Wandlergehäuse 100 befestigten zylindrischen Erregerspule, die im Betrieb von einem entsprechenden Erregerstrom $i_{exc}$ durchflossen ist, und mit einem in die Erregerspule zumindest teilweise eintauchenden dauermagnetischen Anker, der am Meßrohr 10 fixiert ist, dienen. Ferner kann die Erregeranordnung 40 auch, wie z.B. in der US-A 45 24 610 oder der WO-A 03/095950 gezeigt, mittels mehrer Tauchspulen oder auch mittels Elektromagneten realisiert sein.

Zum Detektieren der Schwingungen des Meßrohrs 10 umfasst der Meßaufnehmer ferner eine Sensoranordnung 50, die mittels wenigstens eines auf Vibrationen des Meßrohrs 10 reagierenden ersten Schwingungssensors 51 ein diese repräsentierendes erstes, insb. analoges, Schwingungsmeß-Signal $s_1$ erzeugt. Der Schwingungssensor 51 kann z.B. mittels eines dauermagnetischen Ankers gebildet sein, der am Meßrohr 10 fixiert ist und mit einer vom Gegenschwinger 20 oder vom Wandlergehäuse gehaltenen Sensorspule in Wechselwirkung steht. Als Schwingungssensor 51 sind besonders solche Sensoren geeignet, die, basierend auf dem elektrodynamischen Prinzip, eine Geschwindigkeit der Auslenkungen des Meßrohrs 10 erfassen. Es können aber auch beschleunigungsmessende elektrodynamische oder aber beispielsweise auch wegmessende resistive und/oder optische Sensoren verwendet werden. Selbstverständlich können auch andere dem Fachmann bekannte und für die Detektion solcher Vibrationen geeignete Sensoren verwendet werden. Die Sensoranordnung 60 umfasst ferner einen, insb. zum ersten Schwingungssensor 51 identischen, zweiten Schwingungssensor 52, mittels dem sie ein ebenfalls Vibrationen des Meßrohrs 10 repräsentierendes zweites Schwingungsmeß-Signal $s_2$ liefert. Die beiden Schwingungssensoren 51, 52 sind bei dieser Ausgestaltung entlang des Meßrohrs 10 voneinander beabstandet, insb. in einem gleichen Abstand von der Mitte des Meßrohrs 10, so im Meßaufnehmer 10 angeordnet, dass mittels der Sensoranordnung 50 sowohl einlaß-seitige als auch auslaß-seitige Vibrationen des Meßrohrs 10 örtlich erfaßt und in die entsprechenden Schwingungsmeßsignale $s_1$ bzw. $s_2$ umgewandelt werden. Beide Schwingungsmeßsignale $s_1$, $s_2$, die üblicherweise jeweils eine einer momentanen Schwingfrequenz des Meßrohrs 10 entsprechende Signalfrequenz aufweisen, sind, wie in Fig. 6 gezeigt, der Meßgerät-Elektronik 50 zugeführt, wo sie in der dem Fachmann bekannten Weise mittels einer entsprechenden vorverarbeitet, insb. digitalisiert, und anschließend geeignet ausgewertet werden.

Nach einer Ausgestaltung der Erfindung ist die Erregeranordnung 40, wie auch in Fig. 2, 3 und 4 gezeigt, so ausgebildet und im Meßaufnehmer angeordnet, daß sie im Betrieb gleichzeitig, insb. differentiell, auf Meßrohr 10 und Gegenschwinger 20 wirkt. Bei dieser Weiterbildung der Erfindung ist die Erregeranordnung 40, wie auch in Fig. 2 gezeigt, in vorteilhafter Weise so ausgebildet und so im Meßaufnehmer angeordnet, daß sie im Betrieb gleichzeitig, insb. differentiell, auf Meßrohr 10 und Gegenschwinger 20 wirkt. Im in der Fig. 4 gezeigten Ausführungsbeispiel weist die Erregeranordnung 40 dazu wenigstens eine im Betrieb zumindest zeitweise vom Erregerstrom oder einem Erregerteilstrom durchflossene erste Erregerspule 41a auf, die an einem mit dem Meßrohr 10 verbundenen Hebel 41c fixiert ist und über diesen und einen von außen am Gegenschwinger 20 fixierten Anker 41b differentiell auf das Meßrohr 10 und den Gegenschwinger 20 einwirkt. Diese Anordnung hat u.a. auch den Vorteil, daß einerseits der Gegenschwinger 20 und somit auch das Wandlergehäuse 100 im Querschnitt klein gehalten und trotzdem die Erregerspule 41a, insb. auch bei der Montage, leicht zugänglich ist. Darüber hinaus besteht eine weiterer Vorteil dieser Ausgestaltung der Erregeranordnung 40 auch darin, daß allfällig verwendete, insb. bei Nennweiten von über 80 mm nicht mehr vernachlässigbar schwere, Spulenbecher 41d ebenfalls am Gegenschwinger 20 fixierbar sind und somit praktisch keinen Einfluß auf die Eigenfrequenzen des Meßrohrs 10 haben. Es sei jedoch an dieser Stelle darauf hingewiesen, daß falls erforderlich, die Erregerspule 41a auch vom Gegenschwinger 20 und dementsprechend der Anker 41b vom Meßrohr 10 gehaltert werden können.

In entsprechender Weise können auch die Schwingungssensoren 51, 52 so ausgelegt und im Meßaufnehmer angeordnet sein, daß durch sie die Vibrationen von Meßrohr 10 und Gegenschwinger 20 differentiell erfaßt werden. Im in der Fig. 5 gezeigten Ausführungsbeispiel umfaßt die Sensoranordnung 50 eine am Meßrohr 10 fixierte, hier außerhalb sämtlicher Trägheitshauptachsen der Sensoranordnung 50 angeordnete, Sensorspule 51a. Die Sensorspule 51a ist möglichst nah zu einem am Gegenschwinger 20 fixierten Anker 51b angeordnet und mit diesem magnetisch so gekoppelt, daß in der Sensorspule eine durch rotatorische und/oder laterale, ihre relative Lage und/oder ihren relativen Abstand verändernde Relativbewegungen zwischen Meßrohr 10 und Gegenschwinger 20 beinflußte, veränderliche Meßspannung induziert wird. Aufgrund einer solchen Anordnung der Sensorspule 51a können in vorteilhafter Weise gleichzeitig sowohl die oben genannten Torsionsschwingungen als auch die angeregten Biegeschwingungen erfaßt werden. Falls erforderlich können die Sensorspule 51a dazu aber auch am Gegenschwinger 20 und in entsprechender Weise der mit dieser gekoppelte Anker 51b am Meßrohr 10 fixiert sein.

Nach einer anderen Ausgestaltung der Erfindung sind Meßrohr 10, Gegenschwinger 20 sowie die daran befestigten Sensor- und Erregeranordnungen 40, 50 hinsichtlich ihrer Massenverteilung so aufeinander abgestimmt, daß das so gebildete, mittels des Ein- und am Auslaßrohrstücks 11, 12 aufgehängte Innenteil des Meßaufnehmers einen Massenschwerpunkt MS aufweist, der zumindest innerhalb des Meßrohrs 10, vorzugsweise aber möglichst nah an der Meßrohrlängsachse L liegt. Zudem ist das Innenteil in vorteilhafter Weise so ausgebildet, daß es eine mit dem Einlaßrohrstück 11 und dem Auslaßrohrstück 12 fluchtende und zumindest abschnittsweise innerhalb des Meßrohrs 10 liegende erste Trägheitshauptachse $T_1$ aufweist. Aufgrund der Verlegung des Massenschwerpunktes MS des Innenteils, insb. aber auch aufgrund der vorbeschriebenen Lage der ersten Trägheitshauptachse $T_1$ sind die beiden

betriebsgemäß vom Meßrohr 10 eingenommenen und vom Gegenschwinger 20 weitgehend kompensierten Schwingungsformen, nämlich die Torsionsschwingungen und die Biegeschwingungen des Meßrohrs 10, mechanisch voneinander weitestgehend entkoppelt, vgl. hierzu auch die US-B 68 40 109. Dadurch können beide Schwingungsformen, also Lateralschwingungen und/oder Torsionsschwingungen, in vorteilhafter Weise ohne weiteres voneinander getrennt angeregt werden. Sowohl die Verlegung des Massenschwerpunkts MS als auch der ersten Trägheitshauptachse $T_1$ hin zur Meßrohrlängsachse L kann beispielsweise dadurch erheblich vereinfacht werden, daß das Innenteil, also Meßrohr 10, Gegenschwinger 20 sowie die daran befestigten Sensor- und Erregeranordnungen 50, 40, so ausgebildet und zueinander angeordnet sind, daß eine Massenverteilung des Innenteils entlang der Meßrohrlängsachse L im wesentlichen symmetrisch, zumindest aber invariant gegenüber einer gedachten Drehung um die Meßrohrlängsachse L um 180° (c2-Symmetrie), ist. Zu dem ist der - hier rohrförmig, insb. auch weitgehend axial-symmetrisch, ausgebildete - Gegenschwinger 20 im wesentlichen koaxial zum Meßrohr 10 angeordnet, wodurch das Erreichen einer symmetrischen Massenverteilung des Innenteils erheblich vereinfacht wird und somit auch der Massenschwerpunkt MS in einfacher Weise nah zur Meßrohrlängsachse L hin verlegt wird. Darüber hinaus sind auch die Sensor- und Erregeranordnungen 50, 40 im Ausführungbeispiel so ausgebildet und zueinander am Meßrohr 10 und ggf. am Gegenschwinger 20 angeordnet, daß ein durch sie erzeugtes Massenträgheitsmoment möglichst konzentrisch zur Meßrohrlängsachse L ausgebildet oder zumindest möglichst klein gehalten ist. Dies kann z.B. dadurch erreicht werden, daß ein gemeinsamer Massenschwerpunkt von Sensor- und Erregeranordnung 50, 40 ebenfalls möglichst nah an der Meßrohrlängsachse L liegt und/oder daß eine Gesamtmasse von Sensor- und Erregeranordnung 50, 40 möglichst klein gehalten ist.

Nach einer weiteren Ausgestaltung der Erfindung ist die Erregeranordnung 40 zum Zwecke der getrennten Anregung von Torsions- und/oder Biegeschwingungen des Meßrohrs 10 so ausgebildet und an diesem und am Gegenschwinger 20 so fixiert, daß eine die Biegeschwingungen erzeugende Kraft entlang einer gedachten Kraftlinie auf das Meßrohr 10 wirkt, die außerhalb einer zur ersten Trägheitshauptachse $T_1$ senkrechten zweiten Trägheitshauptachse $T_2$ verläuft oder letztere in höchstens einem Punkt schneidet. Vorzugsweise ist das Innenteil so ausgestaltet, daß die zweite Trägheitshauptachse $T_2$ im wesentlichen mit der oben erwähnten Mittelachse übereinstimmt. Im in der Fig. 4 gezeigten Ausführungsbeispiel weist die Erregeranordnung 40 dazu wenigstens eine im Betrieb zumindest zeitweise vom Erregerstrom oder einem Erregerteilstrom durchflossene erste Erregerspule 41a auf, die an einem mit dem Meßrohr 10 verbundenen Hebel 41c fixiert ist und über diesen und einen von außen am Gegenschwinger 20 fixierten Anker 41b differentiell auf das Meßrohr 10 und den Gegenschwinger 20 einwirkt. Diese Anordnung hat u.a. auch den Vorteil, daß einerseits der Gegenschwinger 20 und somit auch das Wandlergehäuse 100 im Querschnitt klein gehalten und trotzdem die Erregerspule 41a, insb. auch bei der Montage, leicht zugänglich ist. Darüber hinaus besteht ein weiterer Vorteil dieser Ausgestaltung der Erregeranordnung 40 auch darin, daß allfällig verwendete, insb. bei Nennweiten von über 80 mm nicht mehr vernachlässigbar schwere, Spulenbecher 41d ebenfalls am Gegenschwinger 20 zu fixieren sind und somit praktisch keinen Einfluß auf die Resonanzfrequenzen des Meßrohrs 10 haben. Es sei jedoch an dieser Stelle darauf hingewiesen, daß falls erforderlich, die Erregerspule 41a auch vom Gegenschwinger 20 und dementsprechend der Anker 41b vom Meßrohr 10 gehaltert werden können.

Nach einer weiteren Ausgestaltung der Erfindung weist die Erregeranordnung 40 wenigstens eine entlang eines Durchmessers des Meßrohrs 10 angeordnete zweite Erregerspule 42a auf die in gleicher Weise wie die Erregerspule 41a mit dem Meßrohr 10 und dem Gegenschwinger 20 gekoppelt ist. Nach einer anderen bevorzugten Ausgestaltung der Erfindung weist die Erregeranordnung zwei weitere, insgesamt also vier zumindest bezüglich der zweiten Trägheitshauptachse $T_2$ symmetrisch angeordnete Erregerspulen 43a, 44a auf, die alle in der vorgenannten Weise im Meßaufnehmer montiert sind. Die außerhalb der zweiten Trägheitshauptachse $T_2$ auf das Meßrohr 10 einwirkende Kraft kann mittels solcher Zwei- oder Vier-Spulen-Anordnungen in einfacher Weise z.B. dadurch erzeugt werden, daß eine der Erregerspulen, z.B. die Erregerspule 41a, eine andere Induktivität aufweist als die jeweils anderen oder daß eine der Erregerspulen, z.B. die Erregerspule 41a, im Betrieb von einem Erregerteilstrom durchflossen ist, der von einem jeweiligen Erregerteilstrom der jeweils anderen Erregerspulen verschieden ist.

Nach einer anderen Ausgestaltung der Erfindung umfaßt die Sensoranordnung 50, wie in Fig. 5 schematisch dargestellt, eine außerhalb der zweiten Trägheitshauptachse $T_2$ angeordnete, am Meßrohr 10 fixierte Sensorspule 51a. Die Sensorspule 51a ist möglichst nah zu einem am Gegenschwinger 20 fixierten Anker 51b angeordnet und mit diesem magnetisch so gekoppelt, daß in der Sensorspule eine durch rotatorische und/oder laterale, ihre relative Lage und/oder ihren relativen Abstand verändernde Relativbewegungen zwischen Meßrohr 10 und Gegenschwinger 20 beinflußte, veränderliche Meßspannung induziert wird. Aufgrund der erfindungsgemäßen Anordnung der Sensorspule 51a können in vorteilhafter Weise gleichzeitig sowohl die oben genannten Torsionsschwingungen als auch die ggf. angeregten Biegeschwingungen erfaßt werden. Falls erforderlich können die Sensorspule 51a dazu aber auch am Gegenschwinger 20 und in entsprechender Weise der mit dieser gekoppelte Anker 51b am Meßrohr 10 fixiert sein.

Es sei an dieser Stelle ferner erwähnt, daß die Erregeranordnung 40 und die Sensoranordnung 50 in der dem Fachmann bekannten Weise in ihrem mechanischen Aufbau auch im wesentlich gleich ausgeführt sein können; somit lassen sich die vorgenannten Ausgestaltungen des mechanischen Aufbaus der Erregeranordnung 40 im wesentlichen auch auf den mechanischen Aufbau der Sensoranordnung 50 übertragen und umgekehrt.

Zum Vibrierenlassen des Meßrohrs 10 wird die Erregeranordnung 40, wie bereits erwähnt, mittels eines gleichfalls, insb. mehrfrequent, oszillierenden Erregerstroms $i_{exc}$ von einstellbarer Amplitude und von einstellbarer Erregerfrequenz $f_{exc}$ derart gespeist, dass die Erregerspulen 26, 36 im Betrieb von diesem durchflossen sind und in entsprechender Weise die zum Bewegen der Anker 27, 37 erforderlichen Magnetfelder erzeugt werden. Der Erregerstrom $i_{exc}$ kann z.B. harmonisch, mehrfrequent oder auch rechteckförmig sein. Die Lateralschwingungs-Erregerfrequenz $f_{excL}$ eines zum Aufrechterhalten der Lateralschwingungen des Meßrohrs 10 erforderlichen Lateral-Stromanteils $i_{excL}$ vom Erregerstrom $i_{exc}$ kann beim im Ausführungsbeispiel gezeigten Meßaufnehmer in vorteilhafter Weise so gewählt und eingestellt sein, daß das lateral schwingende Meßrohr 10 im wesentlichen in einem Biegeschwingungsgrundmode mit einem einzigen Schwingungsbauch oszilliert. Analog dazu ist auch eine Torsionsschwingungs-Erregerfrequenz $f_{excT}$ eines zum Aufrechterhalten der Torsionsschwingungen des Meßrohrs 10 erforderlichen Torsions-Stromanteils $i_{excT}$ vom Erregerstrom $i_{exc}$ in vorteilhafter Weise so gewählt und eingestellt, daß das torsional schwingende Meßrohr 10 möglichst in seinem Torsionsschwingungs-Grundmode mit einem einzigen Schwingungsbauch oszilliert. Die beiden vorgenannten Stromanteile $i_{excL}$ und $i_{excT}$ können je nach gewählter Betriebsart beispielsweise intermittierend, also momentan jeweils als Erregerstrom $i_{exc}$ wirkend, oder auch simultan, also einander zum Erregerstrom $i_{exc}$ ergänzend, in die Erregeranordnung 40 eingespeist werden.

Für den oben beschriebenen Fall, daß die Lateralschwingungs-Frequenz $f_{excL}$ und die Torsionsschwingungs-Frequenz $f_{excT}$, mit der das Meßrohr im Betrieb schwingen gelassen wird, voneinander verschieden eingestellt sind, kann mittels des Meßaufnehmers in einfacher und vorteilhafter Weise auch bei simultan angeregten Torsions- und Biegeschwingungen, z.B. basierend auf einer Signalfilterung oder einer Frequenzanalyse, eine Separierung der einzelnen Schwingungsmoden sowohl in den Erreger- als auch in den Sensorsignalen erfolgen. Anderenfalls empfiehlt sich eine alternierende Anregung der Lateral- bzw. der Torsionsschwingungen.

Zum Erzeugen und Einstellen des Erregerstroms $i_{exc}$ bzw. der Stromanteile $i_{excL}$, $i_{excT}$ umfaßt die Meßgerät-Elektronik 50 eine entsprechende Treiberschaltung 53, die von einem die einzustellende Lateralschwingungs-Erregerfrequenz $f_{excL}$ repräsentierenden Lateralschwingungs-Frequenzstellsignal $y_{FML}$ und von einem die einzustellende Lateralschwingungs-Amplitude des Erregerstroms $i_{exc}$ und/oder des Lateral-Stromanteils $i_{excL}$ repräsentierenden Lateralschwingungs-Amplitudenstellsignal $y_{AML}$ sowie zumindest zeitweise von einem die einzustellende Torsionsschwingungs-Erregerfrequenz $f_{excT}$ repräsentierenden Torsionsschwingungs-Frequenzstellsignal $y_{FMT}$ und von einem die einzustellende Torsionsschwingungs-Amplitude des Erregerstroms $i_{exc}$ und/oder des Torsions-Stromanteils $i_{excT}$ repräsentierenden Torsionsschwingungs-Amplitudenstellsignal $y_{AMT}$ gesteuert ist. Die Treiberschaltung 53 kann z.B. mittels eines spannungsgesteuerten Oszillators und eines nachgeschalteten Spannungs-zu-Stromwandler realisiert sein; anstelle eines analogen Oszillators kann aber z.B. auch ein numerisch gesteuerter digitaler Oszillator zum Einstellen des momentanen Erregerstroms $i_{exc}$ oder der Anteile $i_{excL}$, $i_{excT}$ des Erregerstroms verwendet werden.

Zum Erzeugen des Lateralschwingungs-Amplitudenstellsignals $y_{AML}$ und/oder Torsionsschwingungs-Amplitudenstellsignals $y_{AMT}$ kann z.B. eine in die Meßgerät-Elektronik 50 integrierte Amplitudenregelschaltung 51 dienen, die anhand momentaner Amplituden wenigstens eines der beiden Schwingungsmeßsignale $s_1$, $s_2$, gemessen bei der momentanen Lateralschwingungsfrequenz und/oder der momentanen Torsionsschwingungsfrequenz, sowie anhand entsprechender, konstanter oder variabler Amplitudenreferenzwerte für die Lateral- bzw. die Torsionsschwingungen $W_B$, $W_T$ die Amplitudenstellsignale $y_{AML}$, $y_{AMT}$ aktualisiert; ggf. können auch momentane Amplituden des Erregerstroms $i_{exc}$ zur Generierung des Lateralschwingungs-Amplitudenstellsignals $y_{AML}$ und/oder des Torsionsschwingungs-Amplitudenstellsignals $y_{AMT}$ hinzugezogen werden. Aufbau und Wirkungsweise derartiger Amplitudenregelschaltungen sind dem Fachmann ebenfalls bekannt. Als ein Beispiel für eine solche Amplitudenregelschaltung sei ferner auf Meßumformer der Serie "PROMASS 83" verwiesen, wie sie von der Anmelderin beispielsweise in Verbindung mit Meßaufnehmern der Serie "PROMASS I" angeboten werden. Deren Amplitudenregelschaltung ist bevorzugt so ausgeführt, daß die lateralen Schwingungen des Meßrohrs 10 auf eine konstante, also auch von der Dichte, $\rho$, unabhängige, Amplitude geregelt werden.

Die Frequenzregelschaltung 52 und die Treiberschaltung 53 können z.B. als Phasen-Regelschleife ausgebildet sein, die in der dem Fachmann bekannten Weise dazu verwendet wird, anhand einer Phasendifferenz, gemessen zwischen wenigstens einem der Schwingungsmeßsignale $s_1$, $s_2$ und dem einzustellenden bzw. dem momentan gemessenen Erregerstrom $i_{exc}$, das Lateralschwingungs-Frequenzstellsignal $y_{FML}$ und/oder das Torsionsschwingungs-Frequenzstellsignal $y_{FMT}$ ständig auf die momentanen Eigenfrequenzen des Meßrohrs 10 abzugleichen. Der Aufbau und die Verwendung solcher Phasenregel-Schleifen zum Betreiben von Meßrohren auf einer ihrer mechanischen Eigenfrequenzen ist z.B. in der

US-A 48 01 897 ausführlich beschrieben. Selbstverständlich können auch andere, dem Fachmann bekannte Frequenzregelschaltungen verwendet werden, wie z.B. auch in der US-A 45 24 610 oder der US-A 48 01 897 vorgeschlagen sind. Ferner sei hinsichtlich einer Verwendung solcher Frequenzregelschaltungen für Meßaufnehmer vom Vibrationstyp auf die bereits erwähnten Meßumfomer der Serie "PROMASS 83" verwiesen. Weitere als Treiberschaltung geeignete Schaltungen können beispielsweise auch der US-A 58 69 770 oder auch der US-A 65 05 519 entnommen werden.

Nach einer weiteren Ausgestaltung der Erfindung sind die Amplitudenregelschaltung 51 und die Frequenzregelschaltung 52, wie in

Fig. 6 schematisch dargestellt, mittels eines in der Meßgerät-Elektronik 50 vorgesehenen digitalen Signalprozessors DSP und mittels in diesen entsprechend implementierter und darin ablaufender Programm-Codes realisiert. Die Programm-Codes können z.B. in einem nicht-flüchtigen Speicher EEPROM eines den Signalprozessor steuernden und/oder überwachenden Mikrocomputers 55 persistent oder aber auch permanent gespeichert sein und beim Starten des Signalprozessors DSP in einen, z.B. im Signalprozessors DSP integrierten, flüchtigen Datenspeicher RAM der Meßgerät-Elektronik 50 geladen werden. Für derartige Anwendungen geeignete Signalprozessoren sind z.B. solche vom Typ TMS320VC33, wie sie von der Firma Texas Instruments Inc. am Markt angeboten werden. Es versteht sich dabei praktisch von selbst, daß die Schwingungsmeßsignale $s_1$, $s_2$ für eine Verarbeitung im Signalprozessor DSP mittels entsprechender Analog-zu-digital-Wandler A/D in entsprechende Digitalsignale umzuwandeln sind, vgl. hierzu insb. die EP-A 866 319. Falls erforderlich, sind vom Signalprozessor ausgegebene Stellsignale, wie z.B. die Amplitudenstellsignale $y_{AML}$, $y_{AMT}$ oder die Frequenzstellsignale $y_{FML}$, $y_{FMT}$ ggf. in entsprechender Weise digital-zu-analog zu wandeln.

Wie in Fig. 6 dargestellt, sind die, ggf. vorab geeignet konditionierten, Schwingungsmeßsignale $s_1$, $s_2$ ferner einer Meßschaltung 21 der Meßgerät-Elektronik zugeführt, die dazu dient anhand wenigstens eines der Schwingungsmeßsignale $s_1$, $s_2$ und/oder anhand des Erregerstroms $i_{exc}$ den wenigstens einen Meßwert $X_X$ zu erzeugen.

Gemäß einer Ausgestaltung der Erfindung ist die Meßschaltung 21 zumindest anteilig als Durchflußrechner ausgebildet und dient die Meßschaltung dazu, in der dem Fachmann an und für sich bekannten Weise anhand einer zwischen den bei zumindest anteilig lateralschwingendem Meßrohr 10 generierten Schwingungsmeßsignalen $s_1$, $s_2$ detektierten Phasendifferenz einen hier als Massendurchfluß-Meßwert $X_m$ dienenden Meßwert erster Art zu ermitteln, der den zu messenden Massenduchfluß **m** möglichst genau repräsentiert. Als Meßschaltung 21 können hierbei in herkömmlichen Coriolis-Massedurchfluß-Meßgeräten bereits eingesetzte und etablierte, insb. digitale, Meßscha ltungen dienen, die den Massendurchfluß anhand der Schwingungsmeßsignale $s_1$, $s_2$ ermitteln, vgl. hierzu insb. die eingangs erwähnte WO-A 02/37063, WO-A 99/39164, die US-A 56 48 616, die US-A 50 69 074. Selbstverständlich können auch andere dem Fachmann bekannte, für Coriolis-Massedurchfluß-Meßgeräte geeignete Meßschaltungen verwendet werden, die Phasen- und/oder Zeitdifferenzen zwischen Schwingungsmeßsignalen der beschriebenen Art messen und entsprechend auswerten. Des weiteren kann die Meßschaltung 21 auch dazu dienen, abgleitet von einer, beispielsweise anhand wenigstens eines der Schwingungsmeßsignale $s_1$, $s_2$, gemessenen Schwingungsfrequenz von Lateralschwingungen des wenigstens einen Meßrohrs 11 einen als Dichte-Meßwert $X_\rho$ verwendbaren Meßwert zweiter Art zu generieren, der eine zu messende Dichte $\rho$ des Mediums momentan repräsentiert. Infolgedessen, daß das gerade Meßrohr 10, wie oben beschrieben, betriebsgemäß, simultan oder alternierend, lateral- und torsional schwingen gelassen wird, kann die Meßschaltung 21 ferner auch dazu verwendet werden, abgeleitet vom Erregerstrom $i_{exc}$, der bekanntlich auch als ein Maß für eine scheinbare Viskosität oder auch ein Viskositäts-Dichte-Produkt des im Meßrohr 11 geführten Mediums dienen kann, einen als Viskositäts-Meßwert $X_\eta$ verwendbaren Meßwert dritter Art zu ermitteln, der eine Viskosität des Mediums momentan repräsentiert, vgl. hierzu auch die US-A 45 24 610, die WO-A 95 16 897 oder die US-B 66 51 513.

Es ist für den Fachmann dabei ohne weiteres klar, daß das In-Line-Meßgerät die einzelnen Meßwerte $X_x$ [$X_m$, $X_\rho$, $X_\eta$...] für die verschiedenen Meßgrößen $x$ [m, $\rho$, $\eta$...] sowohl jeweils in einem gemeinsamem Meßzyklus, also mit einer gleichen Aktualisierungsrate, als auch mit unterschiedlichen Aktualisierungsraten ermitteln kann. Beispielweise erfordert eine hochgenaue Meßung des zumeist erheblich variierenden Massedurchflusses **m** üblicherweise eine sehr hohe Aktualisierungsrate, während die im Vergleich dazu über einen längeren Zeitraum zumeist eher wenig veränderliche Viskosität $\eta$ des Mediums ggf. in größeren Zeitabständen aktualisiert werden kann. Des weiteren kann ohne weiteres vorausgesetzt werden, daß aktuell ermittelte Meßwerte $X_x$ in der Meßgerät-Elektronik zwischengespeichert und so für nachfolgende Verwendungen vorgehalten werden können. In vorteilhafter Weise kann die Meßschaltung 21 desweiteren auch mittels des Signalprozessors DSP realisiert sein.

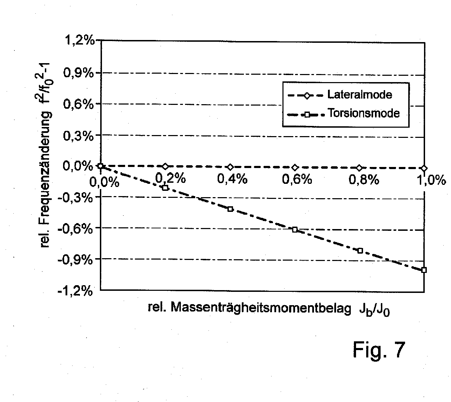

Wie bereits eingangs erwähnt, können sich an Rohrwänden, beispielsweise infolge von Sedimentationsprozessen, niederschlagende Beläge wie auch an der Rohrwand stattfindende Abrasion zu Verfälschungen der Meßergebnisse von In-Line-Meßgeräten führen. Während bei In-Line-Meßgeräten mit Vibrationsaufnehmer vornehmlich Veränderungen Rohrwand des Meßrohrs selbst Einfluß auf die Meßgenauigkeit haben, so können bei In-Line-Meßgeräten mit in hohem Maße vom Strömungsprofil abhängiger Meßgenauigkeit unerkannte Veränderungen an der Rohrwand der Mediums führenden Rohrleitung ebenfalls erhebliche Meßfehler verursachen. Überraschenderweise hat es sich allerdings gezeigt, daß bei Meßaufnehmern vom Vibrationstyp ein an der Rohrwand des Meßrohrs gebildeter Belag im besonderen die natürlichen Torsions-Eigenfrequenzen und insoweit auch die Torsionsschwingungsfrequenz $f_{excT}$, mit der das Meßrohr angeregt wird, beeinflußt, während die natürlichen Lateral-Eigenfrequenzen nahezu unbeeinflußt bleiben können, vgl. hierzu auch Fig. 7. Gleichermaßen sensitiv ist die Torsionsschwingungsfrequenz $f_{excT}$ aber auch gegenüber anderweitigen Veränderungen der Rohrwand des Meßrohrs, beispielsweise Materialreduktionen infolge von abrasiven Medien im Meßrohr.

Im Falle von Belagsbildung läßt sich dies anschaulich dadurch erklären, daß einerseits zwar die Dichte $_{\rho B}$ des Belags B im zeitlichen Mittels im wesentlichen gleich mit einer gleichermaßen gemittelten Dichte des Mediums ist und insoweit die Laterlschwingungsfrequenz $f_{excL}$ nicht im besonderen Maße sensitiv für solche sich am Meßrohr absetzenden Beläge ist, daß aber durch den Belag B die Dicke der Rohrwand virtuell vergrößert und dadurch ein Massenträgheitsmoment des Meßrohrs um die Trägheitshauptachse signifikant verändert wird. Im Fall von Abrasionserscheinungen am Meßrohr wiederum ist die damit jeweils einhergehende Absenkung der momentanen Torsionseigenfrequenzen des Meßrohrs im Vergleich zu der bei neuem Meßgerät intital eingestellten Torsionseigenfrequenzen so ausgeprägt, daß zumindest im Torsions-Grundmode ein Unterschreiten einer vorab bestimmten niedrigsten plausiblen Torsonsschwingungsfrequenz als sehr robuster Indikator für Abrasionen am Meßrohr dienen kann. Daher ist beim erfindungsgemäßen In-Line-Meßgerät ferner vorgesehen, daß die Meßgerät-Elektronik 2 basierend auf der wiederkehrend ermittelten Schwingungsfrequenz, $f_{excT}$, der angeregten Torsionsschwingungen einen Betriebszustand des wenigstens einen Meßrohrs, insb. Belagsbefall und/oder Abrasion des Meßrohrs, überwacht und ggf. das Ergebnis dieser Überwachung auch bei der Ermittlung des jeweiligen Meßwerts $X_x$ berücksichtigt. Der Betriebszustand des Meßrohrs kann dabei z.B. in einfacher Weise anhand einer relativen Änderung

$$\frac{f_{excT}^2}{f_{excT,0}^2} - 1$$

,

oder in vereinfachter, linearisierter Form

$$\frac{f_{excT}}{f_{excT,0}} - 1$$

$$(1)$$

der Torsisons-Schwingungsfrequenz $f_{excT}$ gegenüber einer Referenz-Schwingungsfrequenz $f_{excT,0}$ quantifiziert werden, die für einen gegebenen Meßaufnehmer mit nicht belegtem Meßrohr inital eingestellt ist, und inform eines den Betriebszustand des Meßrohrs repräsentierenden Zustandswerts darzustellen. Anstelle einer quasi direkten Meßung der Torsisons-Schwingungsfrequenz $f_{excT}$ anhand wenigstens eines der Schwingungsmeßsignale $s_1$, $s_2$ kann die momentane Torsisons-Schwingungsfrequenz $f_{excT}$ beispielsweise auch vom in die Erregeranordnung momentan eingespeisten Erregersignals und/oder quasi indirekt anhand des erwähnten Torsionsschwinguns-Frequenzstellsignal $y_{FMT}$.

Nach einer Ausgestaltung der Erfindung ist die Meßgerät-Elektronik 2 dafür ausgelegt, ein Ausmaß, insb. eine effektive Masse $m_B$ und/oder eine mittlere Dicke $d_B$, eines am Meßrohr gebildeten Belags B zu ermitteln, zumindest aber die Anwesenheit vom am Meßrohr gebildetem Belag B zu detektieren. Nach einer Weiterbildung dieser Ausgestaltung der Erfindung ist ferner vorgesehen, daß die Meßgerät-Elektronik basierend auf der ermittelten Schwingungsfrequenz $f_{excT}$ der Torsionsschwingungen einen, beispielsweise Alarm gebenden, Zustandswert $Z_B$ erster Art ermittelt, der zumindest die Anwesenheit eines am Meßrohr gebildeten Belags B signalisiert. Beispielsweise kann dafür ein anhand der Schwingungsfrequenz $f_{excT}$ ermittelter Belags-Meßwert $X_B$ für den Belag mit einem oder auch meheren vorab eingestellten plausiblen Grenzwerten verglichen werden und der Zustandswert $Z_B$ von einem ersten Signalpegel auf einen zweiten Signalpegel umgesetzt werden, wenn Belags-Meßwert $X_B$ einen dafür festgelegten Grenzwert entsprechend überschreitet. Für den Fall, daß der Belags-Meßwert $X_B$ beispielsweise als ein Maß für die effektive Masse $m_B$ des Belags B dienen soll, läßt sich ferner, zumindest unter der Annahme eines im wesentlichen homogenen und im wesentlichen gleichmäßig über das Meßrohr verteilten Belags B, ein weitgehend linearer Zusammenhang zwischen der momentan ermittelten Schwingungsfrequenz $f_{excT}$ und der effektiven Masse $m_B$ mit folgender mathematischen Beziehung sehr einfach darstellen:

$$X_B = K_B \cdot \left( \frac{f_{excT}^2}{f_{excT,0}^2} - 1 \right)$$

$$(2)$$

Zumindest für Medien, die hinsichtlich ihrer Temperatur $_\vartheta$, ihrer Dichte $_\rho$ und ihrer Viskosität $_\eta$ weitgehend konstant bleiben, ist auch der Koeffizient $K_B$

praktisch eine Konstante, die vor oder während der Installation des In-Line-Meßgeräts entsprechend kalibriert und in der Meßgerät-Elektronik digital inform eines Festwerts $K_{B,0}$ entsprechend gespeichert werden kann. Allerdings kann es zur Verbesserung der Genauigkeit, mit der der Belags-Meßwert $X_B$ beispielsweise die effektiven Masse $m_B$ oder eine davon abgeleitete Größe darstellen soll, erforderlich sein, den Koeffizient $K_B$ mittels wenigstens eines der im Betrieb von In-Line-Meßgeräten der beschriebenen Art üblicherweise ohnehin gemessenen und/oder geregelten Betriebsparameter, wie z.B. der Meßrohrtemperatur, der Lateralschwingungsfrequenz $f_{excL}$, der Lateralschwingungsamplitude, der Erregerstromamplitude etc., an die sich ggf. ändernden Mediumseigenschaften, insb. die momentane Temperatur $\vartheta$, Dichte $\rho$ und/oder Viskosität $\eta$ etc., entsprechend anzupassen.

Im besonderen hat sich hierbei gezeigt, daß der gemäß Gl. (2) ermittelte Belags-Meßwert $X_B$ unter Verwendung des Dichte-Meßwerts $X_\rho$ und des Viskositäts-Meßwerts $X_\eta$ von dem momentan im wenigstens einen Meßrohr geführten Medium gemäß folgender Beziehung weitgehend unabhängig gemacht werden kann:

$$X_B = K_B \cdot \left( \frac{f_{excT}^2}{f_{excT,0}^2} - 1 \right) - K_{B,0} \cdot \sqrt{(X_\rho \cdot X_\eta)}$$

$$(3).$$

Der Dichte-Meßwert $X_\rho$ kann, wie bereits erwähnt, beispielsweise basierend auf der üblicherweise im Betrieb von In-Meßgeräten der beschriebenen Art ermittelten Lateralschwingungs-Frequenz $f_{excL}$ und/oder z.B. anhand des Lateralschwingungs-Frequenzstellsignal $y_{FML}$ in der Meßgerät-Elektronik berechnet werden. Gleichermaßen bekannt ist an und für sich auch die Ermittlung des Viskoitäts-Meßwert $X_\eta$ mittels eines In-Line-Meßgeräts der beschriebenen Art, beispielsweise anhand des Torsions-Stromanteils $i_{excT}$, ggf. auch unter Berücksichtigung der Torsionsschwingungs und/oder Lateralschwingungs-Amplitude, vgl. hierzu beispielsweise auch die eingangs erwähnten US-B 68 40 109, US-A 45 24 610 oder US-A 2004/0200268. Alternativ oder in Ergänzung zu der Viskosität des Mediums können beispielsweise auch die von dem im Meßrohr befindlichen Medium bewirkten Dämpfungen der Schwingungen des Meßrohrs, insb. die der Torsionsschwingungen, bei der Ermittlung des Belags-Meßwerts $X_B$ entsprechend berücksichtigt werden.

Nach einer weiteren Ausgestaltung der Erfindung ist ferner vorgesehen, den Belags-Meßwert $X_B$ in der Weise zu ermitteln, daß er als ein Maß für eine momentane Dicke $d_B$ des am Meßrohr gebildeten Belags dienen kann. Dies kann beispielsweise durch eine geringfügige Modifikation der vorgenannten Gl. (2) erfolgen, indem bei der Ermittlung des Belags-Meßwert $X_B$ eine Dichte $\rho_B$ des Belags B entsprechend in die Berechnung mit berücksichtigt wird. Dies kann z.B. dadurch realisiert werden, daß bei weitgehend konstanten Prozeßbedingungen, insb. bei Medien mit weitgehend gleichbleibenden Eigenschaften, die vorab ermittelte Dichte $\rho_B$ des Belags B mit in die als Festwert gespeicherte Kalibrierkonstante $K_{B,0}$ direkt mit einfließen gelassen wird.

Nach einer anderen Ausgestaltung der Erfindung ist zur Verbesserung der Genauigkeit, mit der Belag B abgeschätzt werden soll, ferner jedoch vorgesehen, den erwähnten Koeffizienten $K_B$ für die Ermittlung des Belags-Meßwert $X_B$ wiederkehrend mittels eines aktualisierten Schätzwerts

$\hat{\rho}_B$

für die momentane Belags-Dichte $\rho_B$ an die tatsächlichen Verhältnisse im Meßrohr möglichst gut anzupassen. Entsprechend ist der für die Umsetzung von Gl. (2) verwendete Koeffizienten $K_B$ wie folgt zu modifizieren:

$$K_B = \frac{K'_B}{\hat{\rho}_B}$$

$$(4).$$

Als Schätzwert
$\hat{\rho}_B$
kann hierbei beispielsweise ein auf Prozeß-Erfahrungs- und/oder Prozeß-Historienwerten basierender Rechenwert dienen, der von der übergeordneten Meßwertverarbeitungseinheit entsprechend ermittelt und via Feldbussystem an das In-Line-Meßgerät übertragen ist. Alternativ oder in Ergänzung dazu kann der Schätzwert
$\hat{\rho}_B$
aber auch direkt in der Meßgerät-Elektronik anhand von gemessenen Betriebsparametern ermittelt werden, beispielsweise anhand einer Vielzahl von Dichte-Meßwert $X_\rho$ und/oder Viskoitäts-Meßwert $X_\eta$, über einen längeren Zeitraum gespeicherten und/oder gemittelt worden sind.

Die vorgenannten, dem Erzeugen des Belags-Meßwerts $X_B$, des Koeffizient $K_B$ und/ oder dienenden mathematischen Funktionen, symbolisiert durch die Gln. (2) bis (4), können zumindest teilweise mittels des Signalprozessors DSP oder z.B. auch mittels des oben erwähnten Mikrocomputers 55 realisiert sein. Das Erstellen und Implementieren von entsprechenden Algorithmen, die mit den vorbeschriebenen Gleichungen korrespondierenden oder die die Funktionsweise der Amplitudenregelschaltung 51 bzw. der Frequenzregelschaltung 52 nachbilden, sowie deren Übersetzung in in solchen Signalprozessoren ausführbare Programm-Codes ist dem Fachmann an und für sich geläufig und bedarf daher - jedenfalls in Kenntnis der vorliegenden Erfindung - keiner detailierteren Erläuterung. Selbstverständlich können vorgenannte Gleichungen auch ohne weiteres ganz oder teilweise mittels entsprechender diskret aufgebauter analoger und/oder digitaler Rechenschaltungen in der Meßgerät-Elektronik 50 dargestellt werden.

Nach einer weiteren Ausgestaltung der Erfindung ist die Meßgerät-Elektronik 2 dafür vorgesehen, anhand von Torsionsschwingungen des Meßrohrs ein Ausmaß einer am Meßrohr vorliegenden Abrasion A zu ermitteln, zumindest aber das Vorliegen von Abrasion am Meßrohr zu detektieren. Nach einer Weiterbildung dieser Ausgestaltung der Erfindung ist ferner vorgesehen, daß die Meßgerät-Elektronik basierend auf der ermittelten Schwingungsfrequenz $f_{excT}$ der Torsionsschwingungen einen, beispielsweise Alarm gebenden, Zustandswert $Z_A$ zweiter Art ermittelt, der zumindest das Vorliegen von Abrasion am Meßrohr signalisiert. Durch eine entsprechende Kalibration der Meßgerät-Elektronik 2 kann der so ermittelte Zustandswert $Z_A$ zweiter Art dabei auch in der Weise ermittelt werden, daß er als Abrasions-Meßwert $X_A$ dient, der ein Ausmaß der am Meßrohr vorliegenden Abrasion, insb. ein Defizit in einer momentanen Wandstärke der Rohrwand des Meßrohrs zu einer nominellen Wandstärke, repräsentiert.

In Anbetracht dessen, daß in eher seltenen Anwendungsfällen solche Applikationen zu beherrschen sind, bei denen sowohl eine ausgeprägte Belagsbildung als auch gleichermaßen signifikante Abrasionserscheinungen an Rohrwänden zu erwarten sind, kann die Schwingungsfrequenz $f_{excT}$ der angeregten Torsionsschwingungen zumindest unter Berücksichtigung dementsprechender Zusatzinformation über die jeweilige Applikation durchaus als eindeutiger Indikator für Belagsbildung oder Abrasion angesehen werden. Dies trifft zumindest ab einem gewissen Grade der Abrasion praktisch in jedem Fall zu, da jedwede weitergehende Abrasion zu einer derart erheblichen Absenkung der betrachteten Eigenfrequenzen der Torsionsschwingungen führt, die zumindest nicht mehr durch Belagsbildung plausibel erklärbar wäre. Dementsprechend ist nach einer weiteren Ausgestaltung der Erfindung vorgesehen, daß in der Meßgerät-Elektronik ein erster Zustands-Grenzwert GA für die gemessene Schwingungsfrequenz $f_{excT}$ abgespeichert ist, bei dessen Unterschreiten durch die gemessene Schwingungsfrequenz $f_{excT}$ von der Meßgerät-Elektronik ein erhöhte Abrasion signalisierender Alarm ausgegeben wird. Ferner ist ein zweiter Zustands-Grenzwert $G_{A/B}$ in der Meßgerät-Elektronik abgespeichert, der eine Torsionsschwingungsfrequenz repräsentiert, die höher ist als die durch den ersten Zustands-Grenzwert $G_A$ repräsentierte. Bei Unterschreiten dieses zweiten Zustands-Grenzwert $G_{A/B}$ wird von der Meßgerät-Elektronik, für den Fall, daß das In-Line-Meßgerät in einer zu erhöhtem Belag neigenden Applikation eingesetzt ist, eine beginnende oder fortschreitende Belagsbildung signalisierender Alarm ausgegeben; für den Fall, daß das In-Line-Meßgerät in einer zu erhöhter Abrasion neigenden Applikation eingesetzt ist, wird dann dementsprechend ein beginnende oder fortschreitende Abrasion signalisierender Alarm ausgegeben.

Gemäß einer weiteren Ausgestaltung der Erfindung wird von der Meßgerät-Elektronik anhand einer Vielzahl von über einen längeren Betriebszeitraum gespeicherten und/oder zeitlich gemittelten digitalen Datenwerten für die gemessene Schwingungsfrequenz $f_{excT}$ und/oder anhand einer Vielzahl von über einen längeren Betriebszeitraum gespeicherten und/oder zeitlich gemittelten digitalen Datenwerten für den Betriebszustand des wenigstens einen Meßrohrs anzeigende Zustandswerte eine Restlaufzeit für das In-Line-Meßgerät oder zumindest für das Meßrohr prädiktiv abgeschätzt.

Unter Einbeziehung von die jeweilige Anlage und die darin jeweils geführten Medien betreffender Betriebserfahrung kann ausgehend von dem in der oben beschriebenen Weise zunächst für die Überwachung des In-Line-Meßgeräts selbst ermitteltem Betriebszustand des wenigstens einen Meßrohrs aber auch auf einen momentanen und/oder voraussichtlichen Betriebszustand zumindest von ausgewählten Abschnitten der an das In-Line-Meßgerät angeschlossen Rohrleitung zurückgeschlossen werden, insb. von solchen Rohrwänden, die vom im In-Line-Meßgerät strömenden Medium betriebsgemäß kontaktiert sind. Demgemäß ist nach einer weiteren Ausgestaltung der Erfindung vorgesehen, daß basierend auf der in der oben beschriebenen Weise ermittelten und ausgewerteten Schwingungsfrequenz, $f_{excT}$, der Torsionsschwingungen mittels der Meßgerät-Elektronik ferner einen Betriebszustand zumindest eines ausgewählten, sich zumindest anteilig auch über die an das In-Line-Meßgerät angeschlossen Rohrleitung erstreckenden Abschnitts der Rohrwand überwacht. Dementsprechend können die für die Ermittlung der oben erwähnten Zustandswerte $Z_A$ und/oder $Z_B$ eingesetzten Auswerteverfahren so modifiziert werden, daß die das Abrasions- und/oder Belagsverhalten der Rohrleitung entsprechend mitberücksichtigende Betriebserfahrung in die auf der Schwingungsfrequenz $f_{excT}$ beruhende Berechnungen der Zustandswerte $Z_A$ und/oder $Z_B$ mit einfließen gelassen wird, beispielsweise inform eines entsprechend zeitvarianten, ggf. ereignisgesteuerten Koeffizient $K_B(t)$ in Gln. (2), (3) und/oder (4). Demgemäß ermittelt die Meßgerät-Elektronik nach einer weiteren Ausgestaltung der Erfindung die Zustandswerte $Z_A$ und/oder $Z_B$ in der Weise, daß der darüber jeweils ausgewählte Abschnitt der Rohrwand zumindest nicht ausschließlich der Rohrwand des Meßrohrs entspricht, sondern zumindest anteilig auch einem Abschnitt der Rohrwand der Rohrwand, die das mittels des In-Line-Meßgeräts zu messende Medium führt. Entsprechend kann der Zustandswert $Z_B$ erster Art zumindest die Anwesenheit von Belag in der Rohrleitung signalisieren und kann der Zustandswert $Z_A$ zweiter Art zumindest das Vorliegen von Abrasionen in der Rohrleitung signalisieren. Darüberhinaus kann der Zustandswert $Z_B$ erster Art aber auch das Ausmaß der Belagsbildung in der Rohrleitung, beispielsweise hinsichtlich der Dicke des Belags oder der Masse des Belags, anzeigen oder kann der Zustandswert $Z_A$ zweiter Art das Ausmaß der an Rohrwand zumindest abschnittsweise vorliegenden Abrasion, insb. ein Defizit in einer momentanen Wandstärke der Rohrwand zu einer nominellen Wandstärke, repräsentieren.

Obwohl bei In-Line-Meßgeräten der beschriebenen Art mit einem Meßaufnehmer vom Vibrtaionstyp sich am Meßrohr bildende Beläge zumeist nur einen eher geringen Einfluß auf die Meßgenauigkeit haben, mit der der Massendurchfluß m ermittelt wird, so können solche Beläge am Meßrohr aber durchaus einen erheblichen Einfluß auf die Meßgenauigkeit haben, mit der beispielsweise die Dichte $_\rho$ und/oder die Viskosität $_\eta$ ermittelt werden. Gleichermaßen können bei In-Line-Meßgeräten der beschriebenen Art aber auch Abrasionserscheinungen zu erhöhten Meßfehlern führen, zumindest hier im besonderen aber auch bei der Ermittlung des Massendurchflusses m. Generell ist somit davon auszugehen, daß Belagsbildung wie auch Abrasionserscheinungen dazu führen können, daß ein in herkömmlicher Weise unter Annahme eines unveränderten Meßrohrs ermittelte Meßwert noch nicht ausreichend genau mit der tatsächlichen Meßgröße x, beispielsweise der tatsächlichen Dichte $_\rho$, übereinstimmt, daß also der Meßwert dementsprechend korrigiert werden muß.

Demgemäß generiert die Meßgerät-Elektronik 2 nach einer weiteren Ausgestaltung der Erfindung in herkömmlicher Weise einen praktisch als ein Initial- oder auch Anfangsmeßwert dienenden Meßwert $X'_x$, der die zu messende physikalische Meßgröße x vorläufig repräsentiert oder zumindest mit dieser korrespondiert. In Anbetracht des sehr umfangreichen und sehr detailliert dokumentierten Standes der Technik kann ohne weiteres davon ausgegangen werden, dass die Ermittlung des Anfangsmesswerts $X'_x$, der praktisch dem in herkömmlicher Weise generierten Meßwert entspricht, keinerlei Schwierigkeiten für den Fachmann darstellt, so daß für die weitere Erläuterung der Erfindung der Anfangsmesswert $X'_x$ als gegeben vorausgesetzt werden kann. Ferner generiert die Meßgerät-Elektronik wenigstens einen den oben genannten Betriebszustand des Meßrohrs, beispielsweise also den am Meßrohr gebildeten Belag B, berücksichtigenden Korrekturwert $X_K$ für den initialen Meßwert $X'_x$ basierend auf der ermittelten Schwingungsfrequenz $f_{excT}$ der Torsionsschwingungen. Aus diesem initialen Meßwert $X'_x$ wiederum wird mittels der Auswerte-Elektronik 21 schließlich unter Verwendung des wenigstens einen Korrekturwerts $X_K$ der die physikalische Meßgröße x ausreichend genau repräsentierende, beipielsweise als Massendurchfluß-Meßwert, als Dichte-Meßwert oder als Viskositäts-Meßwert dienende, Meßwert $X_x$ abgeleitet. Die Korrektur des Zwischenwerts $X'_x$ anhand des Korrekturwerts $X_K$ wie auch die Generierung des Meßwerts $X_x$ kann in der Meßgerät-Elektronik beispielsweise basierend auf der mathematischen Beziehung

$$X_x = (1 + X_K) \cdot X'_x$$

$$(5)$$

erfolgen.

Nach einer Weiterbildung der Erfindung wird der zur Bestimmung des momentan geeigneten Korrekturwerts $X_K$ im Betrieb ausgehend von der aktuellen Schwingungsfrequenz $f_{excT}$ der Torsionsschwingungen des Meßrohrs dadurch praktisch direkt ermittelt, dass in der Meßgerät-Elektronik eine eindeutige Beziehung zwischen einem Frequenzwert der Schwingungsfrequenz $f_{excT}$ und dem dazu passenden Korrekturwerts $X_K$ einprogrammiert ist. Hierzu weist die Meßgerät-Elektronik 2 ferner einen Tabellenspeicher auf, in dem ein Satz vorab, beispielsweise bei der Kalibrierung des In-Line-Meßgeräts, ermittelter digitaler Korrekturwerte $X_{K,i}$ abgelegt ist. Auf diese Korrekturwerte $X_{K,i}$ wird von der Meßschaltung über eine mittels des momentan gültigen Frequenzwert der Schwingungsfrequenz $f_{excT}$ ermittelte Speicheradresse praktisch direkt zugegriffen. Der Korrekturwert $X_K$ kann z.B. dadurch in einfacher Weise ermittelt werden, daß ein Frequenzwert der Schwingungsfrequenz $f_{excT}$ mit entsprechenden im Tabellenspeicher eingetragenen Vorgabewerten dafür verglichen und daraufhin derjenige Korrekturwert $X_{K,i}$ ausgelesen, also von der Auswerte-Elektronik 2 für die weitere Berechnung verwendet wird, der mit dem der momentanen Konstellation am nächsten kommenden Vorgabewert korrespondiert. Als Tabellenspeicher kann ein programmierbarer Festwertspeicher, also ein FPGA (field programmable gate array), ein EPROM oder ein EEPROM, dienen. Die Verwendung eines solchen Tabellenspeicher hat u.a. den Vorteil, daß der Korrekturwert $X_K$ nach der Ermittlung der aktuellen Schwingungsfrequenz $f_{excT}$ zur Laufzeit sehr rasch zur Verfügung steht. Zu dem können die in den Tabellenspeicher eingetragenen Korrekturwerte $X_{K,i}$ anhand von wenigen Kalibriermessungen vorab sehr genau, z.B. basierend auf den Gln. (2), (3) und/oder (4) und unter Anwendung der Methode der kleinsten Fehlerquadrate, ermittelt werden.

Wie sich aus den voranstehenden Ausführungen ohne weiters erkennen lässt, kann eine Korrektur des Anfangsmesswerts $X'_x$ einerseits unter Verwendung weniger, sehr einfach zu bestimmender Korrekturfaktoren vorgenommen werden. Andererseits kann die Korrektur unter Verwendung der Schwingungsfrequenz $f_{excT}$ mit einem sehr geringen Rechenaufwand durchgeführt werden. Ein weiterer Vorteil der Erfindung ist ferner auch darin zu sehen, dass zumindest einige der vorbeschriebenen Korrekturfaktoren ohne weiteres von den beispielsweise von den im Betrieb von In-Line-Meßgeräten der beschriebenen Art üblicherweise direkt gemessenen Betriebsparametern selbst abgeleitet und somit praktisch ohne deutliche Erhöhung des schaltungs- und meßtechnischen Aufwands generiert werden können.

**Patentansprüche**

1.  In-Line-Meßgerät, insb. Coriolis-Massedurchfluß-/ Dichtemessgerät und/oder Viskositätsmeßgerät, zum Messen wenigstens einer physikalischen Meßgröße x, insb. eines Massedurchflusses, *m,* ei-

ner Dichte, $\rho$, und/oder einer Viskosität, $\eta$, eines in einer Rohrleitung geführten Mediums, welches In-Line-Meßgerät einen Meßaufnehmer (1) vom Vibrationstyp sowie eine mit dem Meßaufnehmer elektrisch gekoppelte Meßgerät-Elektronik (2) umfaßt,

  - wobei der Meßaufnehmer (1) aufweist:

    -- mindestens ein dem Führen des zu messenden Mediums dienendes im wesentlichen gerades Meßrohr (10), das mit der angeschlossenen Rohrleitung kommuniziert,
    -- eine auf das Meßrohr (10) einwirkende Erregeranordnung (40) zum Vibrierenlassen des wenigstens einen Meßrohrs (10), die das Meßrohr (10) im Betrieb zumindest zeitweise und/oder zumindest anteilig in Torsionsschwingungen um eine ein Einlaßende des Meßrohrs und ein Auslaßende des Meßrohrs imaginär miteinander verbindende Torsionsschwingungsachse versetzt, sowie
    -- eine Sensoranordnung (50) zum Erfassen von Vibrationen des wenigstens einen Meßrohrs (10), die wenigstens ein Schwingungen des Meßrohrs (10) repräsentierendes Schwingungsmeßsignal ($s_1$, $s_2$) liefert, wobei die Meßgerät-Elektronik (2) zumindest zeitweise ein die Erregeranordnung (40) treibendes Erregersignal ($i_{exc}$) liefert und mittels des wenigstens einen Schwingungsmeßsignals ($s_1$, $s_2$) und/oder mittels des Erregersignals ($i_{exc}$) zumindest zeitweise wenigstens einen Meßwert ($X_x$) generiert, der die wenigstens eine zu messende physikalische Meßgröße, insb. den Massendurchfluß, $m$, die Dichte, $\rho$, oder die Viskosität, $\eta$, des Mediums, repräsentiert,

**dadurch gekennzeichnet, daß** die Meßgerät-Elektronik (2) ausgestaltet ist, anhand des wenigstens einen Schwingungsmeßsignals ($s_1$, $s_2$) und/oder anhand des Erregersignals ($i_{exc}$) wiederkehrend eine Schwingungsfrequenz, $f_{excT}$, der Torsionsschwingungen des Meßrohrs (10) zu ermitteln und basierend auf der Schwingungsfrequenz, $f_{excT}$, der Torsionsschwingungen Veränderungen der Rohrwand des wenigstens einen Meßrohrs zu überwachen.

2. In-Line-Meßgerät nach Anspruch 1, wobei die Meßgerät-Elektronik (2) ausgestaltet ist, basierend auf der ermittelten Schwingungsfrequenz, $f_{excT}$, der Torsionsschwingungen zumindest die Anwesenheit eines am Meßrohr gebildeten Belags zu detektieren, insb. ein Ausmaß des am Meßrohr gebildeten Belags zu ermitteln.

3. In-Line-Meßgerät nach dem vorherigen Anspruch,

wobei die Meßgerät-Elektronik (2) ausgestaltet ist, basierend auf der ermittelten Schwingungsfrequenz, $f_{excT}$, der Torsionsschwingungen wenigsten einen Zustandswert erster Art zu ermitteln, der zumindest die Anwesenheit eines am Meßrohr gebildeten Belags signalisiert.

4. In-Line-Meßgerät nach dem vorherigen Anspruch,

  - wobei die Meßgerät-Elektronik (2) ausgestaltet ist, zumindest den Zustandswert erster Art auch unter Berücksichtigung einer Dichte, $\rho$, des Mediums zu ermitteln; und/oder
  - wobei die Meßgerät-Elektronik (2) ausgestaltet ist, den Zustandswert erster Art auch unter Berücksichtigung einer Viskosität, $\eta$, des Mediums zu ermitteln.

5. In-Line-Meßgerät nach einem der vorherigen Ansprüche, wobei die Meßgerät-Elektronik (2) ausgestaltet ist, basierend auf der ermittelten Schwingungsfrequenz, $f_{excT}$, der Torsionsschwingungen Abrasionen des Meßrohrs zu detektieren, insb. ein Ausmaß der am Meßrohr vorliegenden Abrasionen zu ermitteln.

6. In-Line-Meßgerät nach dem vorherigen Anspruch, wobei die Meßgerät-Elektronik (2) ausgestaltet ist, basierend auf der ermittelten Schwingungsfrequenz, $f_{excT}$, der Torsionsschwingungen wenigsten einen Zustandswert zweiter Art zu ermitteln, der zumindest das Vorliegen von Abrasionen des Meßrohrs signalisiert, insb. derart, daß der Zustandswert zweiter Art ein Ausmaß der am Meßrohr vorliegenden Abrasion repräsentiert.

7. In-Line-Meßgerät nach einem der vorherigen Ansprüche,

  - wobei die gedachte Torsionsschwingungsachse im wesentlichen parallel zu einer Trägheitshauptachse des Meßrohrs (10) ausgerichtet ist, insb. im wesentlichen mit der Trägheitshauptachse des Meßrohrs (10) konizidert; und/oder
  - wobei die Meßgerät-Elektronik (2) ausgestaltet ist, basierend auf der ermittelten Schwingungsfrequenz, $f_{excT}$, der Torsionsschwingungen wenigstens einen den am Meßrohr gebildeten Belag berücksichtigenden Korrekturwert zu ermitteln und den wenigstens einen Meßwert ($X_x$) auch unter Verwendung des wenigstens einen Korrekturwerts zu generieren.

8. In-Line-Meßgerät nach einem der vorherigen Ansprüche, wobei die Erregeranordnung (40) das Meßrohr (10) im Betrieb zumindest zeitweise und/oder zumindest anteilig in Lateralschwingungen, insb. Biegeschwingungen, um eine das Einlaßende des Meßrohrs und das Auslaßende des Meßrohrs imaginär miteinander verbindende Lateralschwingungsachse versetzt.

9. In-Line-Meßgerät nach dem vorherigen Anspruch,

    - wobei die gedachte Lateralschwingungsachse im wesentlichen parallel zur Torsionsschwingungsachse ausgerichtet ist, insb. derart, daß die gedachte Lateralschwingungsachse im wesentlichen mit der Torsionsschwingungsachse konizidert; und/oder
    - wobei die Erregeranordnung (40) das Meßrohr (10) im Betrieb alternierend in Torsionsschwingungen oder Lateralschwingungen versetzt; und/oder
    - wobei die Erregeranordnung (40) das Meßrohr (10) im Betrieb zumindest zeitweise simultan in Torsionsschwingungen und Lateralschwingungen versetzt, so daß Torsionsschwingungen und Lateralschwingungen einander überlagern; und/oder
    - wobei die Meßgerät-Elektronik (2) anhand des wenigstens einen Schwingungsmeßsignals ($s_1$, $s_2$) und/oder anhand des Erregersignals ($i_{exc}$) wiederkehrend eine Schwingungsfrequenz, $f_{excL}$, der Lateralschwingungen des Meßrohrs (10) ermittelt.

10. In-Line-Meßgerät nach Anspruch 8 oder 9,

    - wobei die Meßgerät-Elektronik (2) ausgestaltet ist, anhand des wenigstens einen Schwingungsmeßsignals ($s_1$, $s_2$) und/oder anhand des Erregersignals ($i_{exc}$) wiederkehrend eine Schwingungsfrequenz, $f_{excL}$, der Lateralschwingungen des Meßrohrs (10) zu ermitteln, und
    - wobei es sich bei dem wenigstens einen Meßwert ($X_x$) um einen Dichte-Meßwert handelt, der eine zu messende Dichte, $\rho$, des Mediums repräsentiert, und wobei die Meßgerät-Elektronik (2) ausgestaltet ist, den wenigstens einen Meßwert ($X_x$) basierend auf der ermittelten Schwingungsfrequenz, $f_{excL}$, der Lateralschwingungen zu generieren.

11. In-Line-Meßgerät nach einem der Ansprüche 1 bis 9,

    - wobei es sich bei dem wenigstens einen Meßwert ($X_x$) um einen Viskositäts-Meßwert handelt, der eine zu messende Viskosität, $\eta$, des Mediums repräsentiert und
    - wobei die Meßgerät-Elektronik (2) ausgestaltet ist, den wenigstens einen Meßwert ($X_x$) basierend auf einer vom Medium abhängigen Dämpfung von Schwingungen des Meßrohrs (10) unter Verwendung des wenigstens einen Schwingungsmeßsignals ($s_1$, $s_2$) und/oder des Erreger-

signals ($i_{exc}$) zu ermitteln.

12. Verfahren zum Überwachen von Veränderungen einer Rohrwand, die von einem zumindest zeitweise strömenden Medium kontaktiert und infolgedessen zumindest abschnittsweise Veränderungen unterworfen ist, mittels eines In-Line-Meßgeräts mit einem Meßaufnehmer (1) vom Vibrationstyp, insb. mittels eines Coriolis-Massedurchfluß-/ Dichtemessgerätes und/oder Viskositätsmeßgerätes, und einer mit dem Meßaufnehmer (1) elektrisch gekoppelten Meßgerät-Elektronik (2), welches Verfahren folgende Schritte umfasst:

    - Strömenlassen des Mediums durch wenigstens ein Meßrohr (10) des Meßaufnehmers (1), das mit einer an den Meßaufnehmer angeschlossenen, das Medium führenden Rohrleitung kommuniziert, und Einspeisen eines Erregersignals ($i_{exc}$) in eine mit dem Meßrohr (10) mechanisch gekoppelte Erregeranordnung (40) zum Bewirken von Torsionsschwingungen des Meßrohrs (10) um eine ein Einlaßende des Meßrohrs und ein Auslaßende des Meßrohrs imaginär miteinander verbindende Torsionsschwingungsachse,
    - Erfassen von Vibrationen des Meßrohrs (10) zum Erzeugen wenigstens eines Torsionsschwingungen des Meßrohrs (10) zumindest anteilig repräsentierenden Schwingungsmeßsignals ($s_1$, $s_2$) und Verwenden des wenigstens einen Schwingungsmeßsignals ($s_1$, $s_2$) und/oder des Erregersignals ($i_{exc}$) zum Ermitteln einer Schwingungsfrequenz, $f_{excT}$, der Torsionsschwingungen des Meßrohrs (10), sowie
    - Erzeugen eines die Veränderungen der Rohrwand repräsentierenden Zustandswerts basierend auf der ermittelten Schwingungsfrequenz, $f_{excT}$, der Torsionsschwingungen.

13. Verfahren nach Anspruch 12, wobei der Zustandswert zumindest die Anwesenheit von Belag an zumindest einem Abschnitt der Rohrwand signalisiert, insb. derart, daß der Zustandswert ein Ausmaß des an der Rohrwand zumindest abschnittsweise gebildeten Belags repräsentiert.

14. Verfahren nach Anspruch 12, wobei der Zustandswert zumindest die zumindest das Vorliegen von Abrasionen an zumindest einem Abschnitt der Rohrwand signalisiert, insb. derart, daß der Zustandswert ein Ausmaß der an Rohrwand zumindest abschnittsweise vorliegenden Abrasion repräsentiert.

15. Verfahren nach einem der Ansprüche 12 bis 14,

    - wobei sich der überwachte Abschnitt der Rohrwand zumindest anteilig über das Meßrohr erstreckt; und/oder
- wobei sich der überwachte Abschnitt der Rohrwand zumindest anteilig über die an den Meßaufnehmer angeschlossene Rohrleitung erstreckt.

**Claims**

1. In-line measuring device, particularly a Coriolis mass flowmeter, density meter and/or a viscosity meter, designed to measure at least one physical measured variable x, particularly a mass flow, *m,* a density, $\rho$, and/or a viscosity, $\eta$, of a medium conducted through a pipe, said in-line measuring device comprising a vibronic-type sensor (1) and a measuring device electronics unit (2) electrically coupled to the sensor,

    - wherein the sensor (1) comprises:

        -- at least one measuring tube (10), which is essentially straight, said tube serving to conduct the medium to be measured and communicating with the connected pipe,
        -- an exciter arrangement (40) acting on the measuring tube (10), said arrangement being designed to make the at least one measuring tube (10) vibrate, causing the measuring tube (1) to produce torsional vibrations, during operation, at least temporarily and/or at least partially around an axis of torsional vibration connecting, in an imaginary manner, an inlet end of the measuring tube and an outlet end of the measuring tube, as well as
        -- a sensor arrangement (50) designed to measure vibrations of the at least one measuring tube (10), which supplies at least one vibration measuring signal ($s_1$, $s_2$) representing vibrations of the measuring tube (10), wherein the measuring device electronics unit (2) at least temporarily delivers an excitation signal ($i_{exc}$) that drives the exciter arrangement (40), and, using the at least one vibration measuring signal ($s_1$, $s_2$) and/or the excitation signal ($i_{exc}$), at least temporarily generates at least one measured value ($X_x$), which represents the at least one physical measured variable to be measured, particularly the mass flow, *m,* the density, $\rho$, or the viscosity, $\eta$, of the medium,

    **characterized in that**
    the measuring device electronics unit (2) is designed to recurrently determine, on the basis of the at least one vibration measuring signal ($s_1$, $s_2$) and/or on the basis of the excitation signal ($i_{exc}$), a vibration frequency, $f_{excT}$, of the torsional vibrations of the measuring tube (10) and to monitor, on the basis of the vibration frequency, $f_{excT}$, of the torsional vibrations, changes to the wall of the at least one measuring tube.

2. In-line measuring device as claimed in Claim 1, wherein the measuring device electronics unit (2) is designed to detect, on the basis of the vibration frequency, $f_{excT}$, determined for the torsional vibrations, at least the presence of a layer of buildup formed on the measuring tube, particularly to determine a scale of the layer of buildup formed on the measuring tube.

3. In-line measuring device as claimed in the previous claim, wherein the measuring device electronics unit (2) is designed to determine, on the basis of the vibration frequency, $f_{excT}$, determined for the torsional vibrations, at least a status value of the first type, which signals at least the presence of a layer of buildup formed on the measuring tube.

4. In-line measuring device as claimed in the previous claim,

    - wherein the measuring device electronics unit (2) is designed to determine at least the status value of the first type also taking into consideration a density, $\rho$, of the medium; and/or
    - wherein the measuring device electronics unit (2) is designed to determine the status value of the first type also taking into consideration a viscosity, $\eta$, of the medium.

5. In-line measuring device as claimed in one of the previous claims, wherein the measuring device electronics unit (2) is designed to detect, on the basis of the vibration frequency, $f_{excT}$, determined for the torsional vibrations, abrasions of the measuring tube, particularly to determine a scale of the abrasions present on the measuring tube.

6. In-line measuring device as claimed in the previous claim, wherein the measuring device electronics unit (2) is designed to determine, on the basis of the vibration frequency, $f_{excT}$, determined for the torsional vibrations, at least a status value of the second type, which signals at least the presence of abrasions of the measuring tube, particularly in such a way that the status value of the second type represents a scale of the abrasion present on the measuring tube.

7. In-line measuring device as claimed in one of the previous claims,

    - wherein the imaginary axis of torsional vibration is essentially parallel to a principal axis of inertia of the measuring tube (10), particularly essentially coinciding with the principal axis of inertia of the measuring tube (10); and/or
- wherein the measuring device electronics unit (2) is designed to determine, on the basis of the vibration frequency, $f_{excT}$, determined for the torsional vibrations, at least a correction value which takes into consideration the buildup formed on the measuring tube, and to generate the at least one measured value ($X_x$) also using the at least one correction value.

8. In-line measuring device as claimed in one of the previous claims, wherein the exciter arrangement (40) causes the measuring tube (10), during operation, to at least temporarily and/or at least partially produce lateral vibrations, particularly flexural vibrations, around an axis of lateral vibrations connecting, in an imaginary manner, an inlet end of the measuring tube and an outlet end of the measuring tube.

9. In-line measuring device as claimed in the previous claim,

   - wherein the imaginary axis of lateral vibrations is essentially parallel to the axis of torsional vibration, particularly in such a way that the imaginary axis of lateral vibrations essentially coincides with the axis of torsional vibration; and/or
   - wherein, during operation, the exciter arrangement (40) causes the measuring tube (10) to alternately produce torsional vibrations or lateral vibrations; and/or
   - wherein, during operation, the exciter arrangement (40) causes the measuring tube (10) to produce torsional vibrations and lateral vibrations at least partially at the same time, in such a way that torsional vibrations and lateral vibrations overlap; and/or
   - wherein the measuring device electronics unit (2) recurrently determines, using the at least one vibration measuring signal ($s_1$, $s_2$) and/or using the excitation signal ($i_{exc}$), a vibration frequency, $f_{excL}$, of the lateral vibrations of the measuring tube (10).

10. In-line measuring device as claimed in Claim 8 or 9,

   - wherein the measuring device electronics unit (2) is designed to recurrently determine, using the at least one vibration measuring signal ($s_1$, $s_2$) and/or using the excitation signal ($i_{exc}$), a vibration frequency, $f_{excL}$, of the lateral vibrations of the measuring tube (10), and
   - wherein the at least one measured value ($X_x$) is a density measured value, which represents a density, $\rho$, of the medium to be measured, and wherein the measuring device electronics unit (2) is designed to generate a measured value ($X_x$) on the basis of the vibration frequency, $f_{excL}$,

determined for the lateral vibrations.

11. In-line measuring device as claimed in one of the Claims 1 to 9,

   - wherein the at least one measured value ($X_x$) is a viscosity measured value, which represents a viscosity, $\eta$, of the medium to be measured, and
   - wherein the measuring device electronics unit (2) is designed in such a way to determine the at least one measured value ($X_x$) on the basis of an attenuation of the vibrations of the measuring tube (10), said attenuation being dependent on the medium, using the at least one vibration measuring signal ($s_1$, $s_2$) and/or the excitation signal ($i_{exc}$).

12. Procedure for monitoring changes to a tube wall, which is at least temporarily in contact with a flowing medium and, as a consequence, is at least partially subject to changes, using an in-line measuring device with a vibronic-type sensor (1), particularly using a Coriolis mass flowmeter/density meter and/or a viscosity meter, and a measuring device electronics unit (2) electrically coupled to the sensor (1), wherein said procedure comprises the following steps:

   - The medium is allowed to flow through the at least one measuring tube (10) of the sensor (1), which communicates with a pipe that guides the medium and is connected to the sensor, and an excitation signal ($i_{exc}$) is fed into an exciter arrangement (40) mechanically coupled to the measuring tube (10), said arrangement being designed to generate torsional vibrations of the measuring tube (10) around an axis of torsional vibration which connects, in an imaginary manner, an inlet end of the measuring tube and an outlet end of the measuring tube,
   - Vibrations of the measuring tube (10) are measured for the generation of at least one vibration measuring signal ($s_1$, $s_2$) representing, at least partially, torsional vibrations of the measuring tube (10) and use of the at least a vibration measuring signal ($s_1$, $s_2$) and/or the excitation signal ($i_{exc}$) to determine a vibration frequency, $f_{excT}$, of the torsional vibrations of the measuring tube (10), and
   - A status value representing the changes to the tube wall is generated on the basis of the vibration frequency, $f_{excT}$, determined for the torsional vibrations.

13. Procedure as claimed in Claim 12, wherein the status value signals at least the presence of buildup on at least one section of the tube wall, particularly in such a way that the status value represents a scale of the buildup that is formed at least partially on the wall of the tube.

14. Procedure as claimed in Claim 12, wherein the status value signals at least the presence of abrasions on at least one section of the tube wall, particularly in such a way that the status value represents a scale of the abrasion present at least partially on the tube wall.

15. Procedure as claimed in one of the Claims 12 to 14,

- wherein the monitored section of the tube wall extends at least partially over the measuring tube;
- wherein the monitored section of the tube wall extends at least partially over the pipe connected to the sensor.


**Revendications**

1. Appareil de mesure en ligne, notamment un débitmètre massique Coriolis, un densimètre et/ou un viscosimètre, destiné à la mesure d'une grandeur de mesure physique x, notamment un débit massique, $m$, une densité, $\rho$, et/ou une viscosité, $\eta$, d'un produit guidé dans une conduite, lequel appareil de mesure en ligne comprend un capteur (1) du type à vibrations, ainsi qu'une électronique d'appareil de mesure (2) couplée électriquement avec le capteur,

- pour lequel le capteur (1) comprend :

-- au moins un tube de mesure (10) pour l'essentiel droit, lequel tube sert à guider le produit à mesurer et communique avec la conduite raccordée,
-- un circuit d'excitation (40) agissant sur le tube de mesure (10), lequel le circuit est destiné à faire entrer l'au moins un tube de mesure (10), en fonctionnement, au moins temporairement et/ou au moins partiellement en vibrations de torsion autour d'un axe de vibrations de torsion reliant de façon imaginaire une extrémité d'entrée du tube de mesure et une extrémité de sortie du tube de mesure, ainsi que
-- un circuit de capteur (50) destiné à la mesure des vibrations de l'au moins un tube de mesure (10), qui fournit au moins un signal de mesure de vibration ($s_1$, $s_2$) représentant les vibrations du tube de mesure (10), l'électronique d'appareil de mesure (2) délivrant au moins temporairement un signal d'excitation ($i_{exc}$) attaquant le circuit d'excitation (40), et génère, au moyen de l'au moins un signal de mesure de vibration

($s_1$, $s_2$) et/ou au moyen du signal d'excitation ($i_{exc}$), au moins temporairement au minimum une valeur mesurée ($X_x$), qui représente au moins une grandeur de mesure physique à mesurer, notamment le débit massique, $m$, la densité, $\rho$, ou la viscosité, $\eta$, du produit,

**caractérisé**
**en ce que** l'électronique d'appareil de mesure (2) est conçue, sur la base de l'au moins un signal de mesure de vibration ($s_1$, $s_2$) et/ou sur la base du signal d'excitation ($i_{exc}$), de telle sorte à déterminer de façon récurrente une fréquence de vibration, $f_{excT}$, des vibrations de torsion du tube de mesure (10) et à surveiller, sur la base de la fréquence de vibration, $f_{excT}$, des vibrations de torsion, les changements de la paroi de l'au moins un tube de mesure.

2. Appareil de mesure en ligne selon la revendication 1, pour lequel l'électronique d'appareil de mesure (2) est conçue, sur la base de la fréquence de vibration, $f_{excT}$, déterminée pour les vibrations de torsion, de telle sorte à détecter la présence d'un dépôt se formant sur le tube de mesure, notamment à déterminer une ampleur du dépôt se formant sur le tube de mesure.

3. Appareil de mesure en ligne selon la revendication précédente, pour lequel l'électronique d'appareil de mesure (2) est conçue, sur la base de la fréquence de vibration, $f_{excT}$, déterminée pour les vibrations de torsion, de telle sorte déterminer au moins une valeur d'état de premier type, laquelle signale au moins la présence d'un dépôt se formant sur le tube de mesure.

4. Appareil de mesure en ligne selon la revendication précédente,

- pour lequel l'électronique d'appareil de mesure (2) est conçue de telle sorte à déterminer la valeur d'état de premier type également en tenant compte d'une densité, $\rho$, du produit ; et/ou
- pour lequel l'électronique d'appareil de mesure (2) est conçue de telle sorte à déterminer la valeur d'état de premier type également en tenant compte d'une viscosité, $\eta$, du produit.

5. Appareil de mesure en ligne selon l'une des revendications précédentes, pour lequel l'électronique d'appareil de mesure (2) est conçue de telle sorte à détecter, sur la base de la fréquence de vibration, $f_{excT}$, déterminée pour les vibrations de torsion, des abrasions du tube de mesure, notamment à déterminer une ampleur des abrasions présentes sur le tube de mesure.

**6.** Appareil de mesure en ligne selon la revendication précédente, pour lequel l'électronique d'appareil de mesure (2) est conçue de telle sorte à déterminer, sur la base de la fréquence de vibration, $f_{excT}$, déterminée pour les vibrations de torsion, au moins une valeur d'état de second type, laquelle valeur signale au moins la présence d'abrasions du tube de mesure, notamment de telle sorte que la valeur d'état de second type représente une ampleur de l'abrasion présente sur le tube de mesure.

**7.** Appareil de mesure en ligne selon l'une des revendications précédentes,

- pour lequel l'axe de vibrations de torsion imaginaire est pour l'essentiel parallèle à un axe principal d'inertie du tube de mesure (10), notamment pour l'essentiel coïncidant avec l'axe principal d'inertie du tube de mesure (10) ; et/ou
- l'électronique d'appareil de mesure (2) est conçue de telle sorte à déterminer, sur la base de la fréquence de vibration, $f_{excT}$, déterminée pour les vibrations de torsion, au moins une valeur de correction tenant compte du dépôt formé sur le tube de mesure, et à générer l'au moins une valeur mesurée ($X_x$) également en utilisant l'au moins une valeur de correction.

**8.** Appareil de mesure en ligne selon l'une des revendications précédentes, pour lequel le circuit d'excitation (40) fait entrer, en fonctionnement, le tube de mesure (10) au moins temporairement et/ou au moins partiellement en vibrations latérales, notamment en vibrations de flexion, autour d'un axe de vibrations latérales reliant de façon imaginaire une extrémité d'entrée du tube de mesure et une extrémité de sortie du tube de mesure.

**9.** Appareil de mesure en ligne selon la revendication précédente,

- pour lequel l'axe de vibrations latérales imaginaire est pour l'essentiel parallèle à l'axe de vibrations de torsion, notamment de telle sorte que l'axe de vibrations latérales imaginaire coïncide pour l'essentiel avec l'axe de vibrations de torsion ; et/ou
- pour lequel le circuit d'excitation (40) fait entrer, en fonctionnement, le tube de mesure (10) alternativement en vibrations de torsion ou en vibrations latérales ; et/ou
- pour lequel le circuit d'excitation (40) fait entrer, en fonctionnement, le tube de mesure (10) au moins partiellement simultanément en vibrations de torsion et en vibrations latérales, de telle sorte que les vibrations de torsion et les vibrations latérales se superposent les unes aux autres ; et/ou

- pour lequel l'électronique d'appareil de mesure (2) détermine, au moyen de l'au moins un signal de mesure de vibration ($s_1$, $s_2$) et/ou au moyen du signal d'excitation ($i_{exc}$) de façon récurrente une fréquence de vibration, $f_{excL}$, des vibrations latérales du tube de mesure (10).

**10.** Appareil de mesure en ligne selon la revendication 8 ou 9,

- pour lequel l'électronique d'appareil de mesure (2) est conçue de telle sorte à déterminer, au moyen de l'au moins un signal de mesure de vibration ($s_1$, $s_2$) et/ou au moyen du signal d'excitation ($i_{exc}$) de façon récurrente une fréquence de vibration, $f_{excL}$, des vibrations latérales du tube de mesure (10), et
- pour lequel il s'agit, concernant l'au moins une valeur mesurée ($X_x$) d'une valeur mesurée de densité, qui représente une densité mesurée, $\rho$, du produit, et pour lequel l'électronique d'appareil de mesure (2) est conçue de telle sorte à générer une valeur mesurée ($X_x$) sur la base de la fréquence de vibration, $f_{excL}$, déterminée pour les vibrations latérales.

**11.** Appareil de mesure en ligne selon l'une des revendications 1 à 9,

- pour lequel il s'agit, concernant l'au moins une valeur mesurée ($X_x$), d'une valeur mesurée de viscosité, qui représente une viscosité, $\eta$, à mesurer du produit, et
- pour lequel l'électronique d'appareil de mesure (2) est conçue de telle sorte à déterminer l'au moins une valeur mesurée ($X_x$) sur la base d'un amortissement des vibrations du tube de mesure (10), lequel amortissement dépend du produit, en utilisant l'au moins un signal de mesure de vibration ($s_1$, $s_2$) et/ou le signal d'excitation ($i_{exc}$).

**12.** Procédé destiné à la surveillance de changements d'une paroi de tube, laquelle est en contact au moins temporairement avec un produit en écoulement et, en conséquence, subit au moins partiellement des changements, au moyen d'un appareil de mesure en ligne avec un capteur du type à vibrations, notamment au moyen d'un débitmètre massique Coriolis, d'un densimètre et/ou d'un viscosimètre, et une électronique d'appareil de mesure (2) couplée électriquement avec le capteur (1), lequel procédé comprend les étapes suivantes :

- Écoulement du produit à travers au moins un tube de mesure (10) du capteur (1), qui communique avec une conduite guidant le produit et raccordée au capteur, et injection d'un signal d'excitation ($i_{exc}$) dans un circuit d'excitation (40) couplé mécaniquement avec le tube de mesure (10), lequel circuit est destiné à générer des vibrations de torsion du tube de mesure (10) autour d'un axe de vibrations de torsion reliant de façon imaginaire une extrémité d'entrée du tube de mesure et une extrémité de sortie du tube de mesure,

- Mesure des vibrations du tube de mesure (10) pour la génération d'au moins un signal de mesure de vibration ($s_1$, $s_2$) représentant au moins partiellement les vibrations de torsion du tube de mesure (10) et/ou du signal d'excitation ($i_{exc}$) destiné à la détermination d'une fréquence de vibration, $f_{excT}$, des vibrations de torsion du tube de mesure (10), ainsi que

- Génération d'une valeur d'état représentant les changements de la paroi de tube sur la base de la fréquence de vibration, $f_{excT}$, déterminée pour les vibrations de torsion.

13. Procédé selon la revendication 12, pour lequel la valeur d'état signale au moins la présence de dépôt sur au moins une partie de la paroi du tube, notamment de telle sorte que la valeur d'état représente une ampleur du dépôt qui s'est formé au moins partiellement sur la paroi du tube.

14. Procédé selon la revendication 12, pour lequel la valeur d'état signale au moins la présence d'abrasions sur au moins une partie de la paroi du tube, notamment de telle sorte que la valeur d'état représente une ampleur de l'abrasion présente au moins partiellement sur la paroi du tube.

15. Procédé selon l'une des revendications 12 à 14,

- pour lequel la partie surveillée de la paroi du tube s'étend au moins partiellement sur le tube de mesure ;
- pour lequel la partie surveillée de la paroi du tube s'étend au moins partiellement sur la conduite raccordée au capteur.

Fig. 1

Fig. 2

Fig. 3

Fig. 5

Fig. 4

Fig. 6

EP 1 938 052 B1

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 05040734 A
- WO 05040733 A
- WO 03095950 A
- WO 03095949 A
- WO 03076880 A
- WO 0237063 A
- WO 0133174 A
- WO 0057141 A
- WO 9939164 A
- WO 9807009 A
- WO 9516897 A
- WO 8803261 A
- US 20050229719 A
- US 20040200268 A
- US 20030208325 A
- US 6889561 B
- US 6840109 B
- US 6691583 B
- US 6651513 B
- US 6513393 B
- US 6505519 B
- US 6006609 A
- US 5869770 A
- US 5796011 A
- US 5616868 A
- US 5602346 A
- US 5602345 A
- US 5531126 A
- US 5301557 A
- US 5253533 A
- US 5218873 A
- US 5069074 A
- US 4876898 A
- US 4733569 A
- US 4680974 A
- US 4660421 A
- US 4524610 A
- US 4491025 A
- US 4187721 A
- EP 1291639 A
- EP 1281938 A
- EP 1001254 A
- EP 553939 A
- US 6512987 B
- US 4768384 A
- EP 578113 A
- US 6557422 B
- US 5907104 A
- US 5831178 A
- US 5773727 A
- US 5728952 A
- US 4801897 A
- US 5648616 A
- EP 1158289 A
- US 5969265 A
- EP 317340 A
- WO 0014485 A
- US 6505519 A
- EP 866319 A